(19) Europäisches Patentamt
European Patent Office
Office européen des brevets

(11) **EP 3 894 825 B1**

(12) **FASCICULE DE BREVET EUROPEEN**

(45) Date de publication et mention de la délivrance du brevet:
**15.03.2023 Bulletin 2023/11**

(21) Numéro de dépôt: **19842820.3**

(22) Date de dépôt: **16.12.2019**

(51) Classification Internationale des Brevets (IPC):
**G01M 17/02** (2006.01)   **B60C 11/24** (2006.01)
**B60C 23/06** (2006.01)   **B60T 8/172** (2006.01)

(52) Classification Coopérative des Brevets (CPC):
**G01M 17/02; B60C 11/246; B60C 23/02; B60T 8/172**

(86) Numéro de dépôt international:
**PCT/FR2019/053088**

(87) Numéro de publication internationale:
**WO 2020/120923 (18.06.2020 Gazette 2020/25)**

(54) **MODÈLE DE PRÉDICTION DE L'USURE ET DE LA FIN DE VIE D'UN PNEUMATIQUE**

MODELL ZUR VORHERSAGE DES VERSCHLEISSES UND DES LEBENSDAUERENDES EINES REIFENS

MODEL FOR PREDICTING WEAR AND THE END OF LIFE OF A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2018   FR 1872931**
**30.01.2019   FR 1900866**

(43) Date de publication de la demande:
**20.10.2021   Bulletin 2021/42**

(73) Titulaire: **COMPAGNIE GENERALE DES ETABLISSEMENTS MICHELIN**
**63000 Clermont-Ferrand (FR)**

(72) Inventeurs:
• **FRAENKEL, Anne-Laure**
**63040 CLERMONT-FERRAND Cedex 9 (FR)**

• **ABINAL, Richard**
**63040 CLERMONT-FERRAND Cedex 9 (FR)**
• **DELIAS, Nicolas**
**63040 CLERMONT-FERRAND Cedex 9 (FR)**
• **DUBOURG, Vincent**
**63040 CLERMONT-FERRAND Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 378 378        US-A1- 2004 225 423**
**US-A1- 2015 057 877**

EP 3 894 825 B1

## Description

## Domaine de l'invention

La présente invention concerne une méthode d'estimation de l'usure à une échelle globale ainsi qu'une méthode de prédiction fin de vie d'un pneumatique en condition d'usage sur véhicule et un système de mise en oeuvre de ces méthodes.

## Arrière-plan technologique

Dans le domaine des méthodes d'évaluation de l'usure d'un pneumatique en condition d'usage sur véhicule, il est fréquemment considéré qu'une manière simple et facile de la déterminer est d'évaluer l'usure globale correspondant à la diminution moyenne de la hauteur de la bande de roulement. A cet effet, il est couramment envisagé d'employer une grandeur physique intermédiaire sensible à l'usure de la bande de roulement d'un pneumatique telle que, par exemple, le rayon de roulement $R_e$ ou la rigidité longitudinale $K_{xx}$. Cette seconde grandeur représente la pente de la courbe représentant les efforts longitudinaux $F_x$ générés par la variation de vitesse de rotation w entre le centre roue et la bande de roulement lorsque l'ensemble monté roule sur la route. La sensibilité de la rigidité longitudinale est bien plus forte à l'usure globale de l'enveloppe pneumatique que la sensibilité du rayon de roulement.

On connaît dans l'état de la technique, dans le document US6076035 A, des méthodes employant une telle seconde grandeur pour caractériser l'usure globale de la bande de roulement du pneumatique en service. Cette grandeur est en effet sensible à la diminution de la hauteur de la bande de roulement caractérisant l'usure globale de l'enveloppe pneumatique. On connaît aussi dans l'état de l'art, le document U22004/225423A1 qui détermine le rayon de roulement $R_e$ ou la rigidité longitudinale $K_{XX}$ de façon robuste à l'aide d'algorithmes non linéaires pour un ensemble monté soumis à un couple.

Mais, cette grandeur physique est aussi sensible à d'autres paramètres tels que la pression de gonflage, la température, la charge portée par l'ensemble monté, la nature du sol sur lequel roule l'ensemble monté. Ainsi il faut tenir compte des variations de l'ensemble des paramètres influents pour extraire la variation de rigidité longitudinale due uniquement à la diminution de la hauteur de la bande de roulement du pneumatique. Pour ce faire, les solutions préconisées consistent à prendre en compte les variations de ces paramètres influents au travers de mesures additionnelles ou d'informations complémentaires. Si cela semble assez aisé au niveau de la température ou de la pression de gonflage du pneumatique par le biais de mesures directes, la tâche est beaucoup plus délicate au niveau de la nature du sol ou d'autres paramètres influents. Bien entendu la non prise en compte d'un paramètre influent conduit à commettre une erreur sur l'évaluation de l'usure globale du pneumatique.

La présente invention a pour objectif de proposer des solutions permettant de prendre en compte l'ensemble des paramètres influents et en particulier la nature du sol afin d'être plus précis sur l'estimation de l'usure globale et la prédiction de fin de vie du pneumatique.

## Description de l'invention

L'invention porte tout d'abord sur une méthode d'estimation du niveau d'usure globale d'un pneumatique d'un ensemble monté en condition de roulage sur un véhicule. Le pneumatique a un sommet qui se prolonge par deux flancs se terminant par deux bourrelets, de révolution autour d'un axe naturel de rotation. Le sommet comprend une bande de roulement située radialement extérieurement au pneumatique par rapport à l'axe naturel de rotation présentant une épaisseur moyenne E. L'ensemble monté comprend des composants, dont une roue et le pneumatique, délimitant une cavité interne. La méthode d'estimation comprend les étapes suivantes :

- Optionnellement, obtenir une identification des au moins un composants de l'ensemble monté, de préférence l'enveloppe pneumatique ;

- Obtenir une fonction de transfert F de l'ensemble monté entre une rigidité longitudinale $K_{XX}^{ref}$ sur un sol de référence et des facteurs influents, comme étant le produit d'une première fonction F1 ayant comme facteurs influents au moins la pression de gonflage P, la température T et la charge Z subie, par une seconde fonction F2 bijective ayant au moins comme facteur influent l'épaisseur E de la bande de roulement ;

- Obtenir une fonction de passage $\beta$ de l'ensemble monté, qui dépend des facteurs influents liés à l'usage de l'ensemble monté que sont la pression de gonflage P, la température T et la charge Z subie par l'ensemble monté, définie pour une portion de route comme étant le rapport des rigidités longitudinales $K_{XX}$ de l' ensemble monté à iso facteurs influents dont celle au numérateur est évaluée sur un sol équivalent à la portion de route et celle au dénominateur est évaluée sur un sol de référence, les dites rigidités longitudinales $K_{xx}$ étant obtenues par une campagne de caractérisations expérimentales et/ou simulations numériques ;

Sur un cycle de mesures, c'est-à-dire_à iso condition d'usage pour les facteurs influents tels que la pression P de gonflage, la température T et la charge Z subie :

- Déterminer au moins un effort $F_x$ subi par l'ensemble monté et au moins un taux de glissement g% au centre roue de l'ensemble monté, ou obtenir les paramètres Q1 du véhicule permettant leur détermination, lors d'un roulage en ligne droite du véhicule comportant des variations d'accélération sur ladite portion de route, celle-ci étant sèche ;

- Déterminer une charge Z1 subie par l'ensemble monté en condition de roulage ou les paramètres Q2 du véhicule permettant sa détermination ;

- Déterminer une température T1 de l'ensemble monté en condition de roulage

- Déterminer une pression de gonflage P1 de la cavité interne de l'ensemble monté en condition de roulage.

La méthode est **caractérisée en ce que** elle comprend l'obtention d'une première rigidité longitudinale $K_{XX}^{reel}$ de l'ensemble monté sur sol réel à l'aide d'une première relation liant l'effort Fx et le taux de glissement g% ou les paramètres Q1, **en ce qu'**elle comprend l'obtention d'une seconde rigidité longitudinale $K_{XX}^{ref}$ sur le sol de référence évaluée à l'aide de la fonction de transfert F alimentée par au moins les facteurs influents T1, P1, Z1 ou les paramètres Q2, et au moins une épaisseur caractéristique E0 de la bande de roulement, **en ce qu'**elle comprend l'obtention d'un scalaire $\beta_1$ défini à l'aide de la fonction de passage β alimentée par au moins les facteurs influents T1, P1, Z1 **et en ce que** l'épaisseur E de la bande de roulement est déterminée par une seconde relation liant le scalaire β1, la première rigidité longitudinale $K_{XX}^{reel}$ et la seconde rigidité longitudinale $K_{XX}^{ref}$ de la manière suivante :

$$E = F_2^{-1}\left(\frac{F_2(E_0) * K_{xx}^{reel}}{\beta_1 * K_{xx}^{ref}}\right)$$

On entend ici par le terme « cycle de mesures » que l'ensemble monté est à iso condition d'usage pour les paramètres tels que la pression P de gonflage, la température T et de charge Z subie. Bien entendu on entend par le terme iso condition que les variations de ces paramètres au cours du cycle de mesures sont insignifiantes par rapport à la valeur moyenne de ces paramètres sur la totalité du cycle de mesures. De plus, l'usure E de la bande de roulement et tout autre paramètre influent associé à l'état de l'ensemble monté sont considérés comme invariants au cours du même cycle de mesures. En effet, le cycle de mesures a une durée bien inférieure à la durée nécessaire pour observer une variation de l'état de l'ensemble monté.

On entend ici par le terme « cycle d'état de l'ensemble monté » que les paramètres influents d'un second groupe H comme l'épaisseur de la bande de roulement sont constants sur la durée du cycle. En revanche, les paramètres d'un premier groupe G liés à l'usage peuvent varier sur la durée de ce cycle.

On entend ici par le terme « obtenir une donnée » que cette donnée est définie par une mesure, une estimation ou que cette donnée est déterminée de manière forfaitaire.

De ce fait, il faut que la détermination des divers paramètres de l'ensemble monté soit effectuée dans une durée courte correspondant au cycle de mesures. Tous les moyens de l'état de l'art respectant cette contrainte peuvent être employés. Ainsi les mesures de pression P1 et de température T1 seront classiquement obtenues par des capteurs directs ou indirects. A titre d'exemple non limitatif un capteur de pression en communication fluidique avec la cavité interne de l'ensemble monté est une mesure directe de la pression de gonflage. En revanche un capteur de température du fluide contenu dans la cavité interne est une mesure indirecte de la température de l'ensemble monté et en particulier de la bande de roulement du pneumatique. L'emploi d'un modèle thermique prenant en compte les échanges thermiques entre les divers composants (fluide interne, composants de l'ensemble monté et fluide externe) et selon les divers modes de transmission (rayonnement, convexion, conduction) est nécessaire. Bien entendu une mesure par l'intermédiaire d'un thermocouple implanté dans le pneumatique est une mesure plus directe de la température mais celle-ci est délicate à mettre en oeuvre puisque cela nécessite une modification structurelle de l'enveloppe pneumatique.

Ces capteurs sont classiquement packagés dans des systèmes électroniques fixés à l'ensemble monté comme par exemple des TPMS (acronyme en anglais de Tire Pressure Monitoring System) montés à la valve ou des TMS (acronyme en anglais de Tyre Mounted Sensors) fixés sur la paroi interne du pneumatique délimitant la cavité interne.

En ce qui concerne la charge subie par l'ensemble monté, diverses techniques de mesure sont possibles. Des premières estimations s'appuyant sur l'évaluation puis la répartition de la charge statique globale du véhicule peuvent être employés. De plus la masse statique du véhicule peut être ajustée par des indicateurs du véhicule compris dans le groupe comprenant le niveau de carburant, l'enclencheur de ceinture de sécurité, l'assiette du véhicule, l'état de compression des amortisseurs. Dans ce cas, un ensemble de paramètres Q1 du véhicule est employé.

Des mesures plus directes au niveau de l'ensemble monté peuvent aussi être envisagées. Par exemple la calibration d'un signal périodique au tour de roue permet d'extraire une dimension longitudinale, caractéristique du contact entre l'enveloppe pneumatique et le sol pour un ensemble monté donné. Dans ce cas, un capteur sensible à la déformation radiale et/ou longitudinale du pneumatique du type, par exemple, accéléromètre ou élément piézoélectrique est envisagé. L'utilisation d'abaques entre cette dimension caractéristique et la pression de gonflage P permet de remonter à une évaluation de la charge Z subie par l'ensemble monté.

Bien entendu d'autres dispositifs peuvent aussi être employés. A titre d'exemple illustratif non limitatif, on notera que le traitement d'au moins deux mesures d'extension ou de contraction circonférentielle dans au moins un flanc de l'enveloppe en deux points fixes dans l'espace, situés à des azimuts différents le long de la circonférence permet d'estimer les efforts au centre roue. Cette contraction ou extension circonférentielle des flancs est avantageusement estimée par la mesure de la distance entre les fils de la nappe carcasse des flancs. On se reportera au document de brevet WO-A-03/014693 au nom des demanderesses pour une description détaillée de cette mesure des caractéristiques de l'ensemble monté.

Enfin, pour la mesure de rigidité longitudinale Kxx, celle-ci nécessite à la fois de mesurer les efforts $F_X$ au centre roue de l'ensemble monté et le taux de glissement g% de l'ensemble monté par rapport au sol réel. Ainsi, il faut obtenir une information fiable de ces deux grandeurs en temps réel.

Pour les efforts longitudinaux Fx au centre roue de l'ensemble monté, ceux-ci peuvent être estimés, par exemple, au travers des couples appliqués autour de l'axe de rotation de l'ensemble monté, qu'ils soient moteurs ou freineurs. Ceci implique de pouvoir remonter à ces données par l'intermédiaire des caractéristiques du véhicule.

Ils peuvent aussi être obtenus au travers de la charge statique du véhicule et de l'accélération longitudinale du centre de gravité du véhicule couplée à la répartition des efforts moteurs et freineurs entre les essieux avant et arrière. Optionnellement, le modèle physique permettant de remonter aux efforts longitudinaux Fx au centre roue de l'ensemble monté prend en compte différents paramètres Q2 dont la pente de la route, la vitesse d'avancement du véhicule, la trainée aérodynamique du véhicule et la résistance au roulement de l'enveloppe pneumatique.

Enfin, des mesures plus directes au niveau de l'ensemble monté peuvent aussi être envisagées pour évaluer les efforts Fx centre roue. On notera à titre d'exemple illustratif non limitatif que le traitement d'au moins deux mesures d'extension ou de contraction circonférentielle dans au moins un flanc de l'enveloppe en deux points fixes dans l'espace, situés à des azimuts différents le long de la circonférence permet d'estimer les efforts au centre roue. Cette contraction ou extension circonférentielle des flancs est avantageusement estimée par la mesure de la distance entre les fils de la nappe carcasse des flancs. On se reportera au document de brevet WO-A-03/014693 au nom des demanderesses pour une description détaillée de cette mesure des caractéristiques de l'ensemble monté.

L'autre caractéristique indispensable à l'évaluation de la rigidité longitudinale Kxx est le taux de glissement g% de l'ensemble monté au centre roue. Cette grandeur peut être estimée directement par les données fournies par les systèmes électroniques embarqués sur le véhicule comme le système ABS. Il peut aussi être évalué au travers de trois paramètres élémentaires qui sont la vitesse de rotation W de l'ensemble monté au centre roue, le rayon de roulement Re de l'ensemble monté et la vitesse d'avancement V0 du véhicule.

La vitesse de rotation W peut être simplement obtenue par un codeur tour de roue couplé à une horloge. Le rayon de roulement Re de l'ensemble monté, qui est peu sensible à l'usure, est obtenu à l'aide de la distance parcourue par le véhicule et du nombre de tours effectués par l'ensemble monté pour parcourir cette distance. Enfin, la vitesse d'avancement V0 du véhicule est obtenue par l'intermédiaire d'un dispositif de mesure haute fréquence de type RT 3000 par exemple pour avoir une précision suffisante.

Finalement, l'usure globale du pneumatique est évaluée en temps réel par la détermination quasi simultanée des paramètres de l'ensemble monté, que sont les conditions d'usage, influençant la rigidité longitudinale Kxx de l'ensemble monté et des paramètres d'état de l'ensemble monté et en particulier du pneumatique qui ont été déterminés sur une durée éventuellement plus longue.

En particulier il est nécessaire de prendre en compte l'influence de la nature du sol au travers d'un indicateur, le scalaire β1 défini à l'aide de la fonction de passage β. Contrairement aux solutions proposées dans l'art antérieur, l'indicateur choisi n'est pas construit seulement à partir de l'information de macrorugosité du sol. Mais surtout, l'indicateur est aussi lié à l'ensemble monté et en particulier son interaction avec le sol qui s'exprime au travers de la rigidité de la bande de roulement du pneumatique qui est l'élément structurel du pneumatique en contact avec le sol. Ainsi, la fonction de passage β et par voie de conséquence le scalaire β1 sont définis à l'aide de la rigidité longitudinale de l'ensemble monté et ils sont liés à l'ensemble monté. Bien entendu, la fonction de passage β est aussi liée à la portion de route caractérisée par sa localisation géographique au travers par exemple d'une donnée GPS. Cependant, on pourra prendre une fonction forfaitaire pour cette grandeur β connaissant la sensibilité de la rigidité longitudinale Kxx de l'ensemble monté selon la nature du sol, selon l'état du pneumatique et à une estimation de la nature du sol réel de la portion de route. La prise en compte de l'interaction entre le sol et l'ensemble monté est un facteur clé pour une identification de qualité de l'épaisseur E de la bande de roulement. L'identification de la fonction de passage β de l'ensemble monté est obtenue par une campagne de caractérisations expérimentales et/ou simulations numériques. On crée pour cela une série de caractérisations en comprenant les rigidités longitudinales de l'ensemble monté à ces iso facteurs influents entre le sol à caractériser et un sol de référence. La fonction de passage β dépend potentiellement des facteurs influents liés à l'usage de l'ensemble monté que sont par exemple la pression de gonflage P, la température T et la charge Z subie par l'ensemble monté.

De plus, la fonction de transfert F sur sol de référence est une donnée intrinsèque à l'ensemble monté. Celle-ci permet de dissocier proprement les variations de rigidité longitudinale dues aux paramètres d'usage, comme la pression P, et d'état, comme l'usure de la bande de roulement, de l'ensemble monté indépendamment de celles générées par les paramètres liés à la chaussée en général. De plus, l'identification de cette fonction de transfert F peut être effectuée dans des conditions métrologiques maîtrisées. La connaissance du sol et des conditions d'usage et d'état dont notamment la charge est primordiale à une identification précise de cette fonction de transfert F. Ainsi une meilleure précision de l'estimation de l'épaisseur moyenne E de la bande de roulement est atteinte indépendamment de l'interaction avec le sol réel.

Enfin, l'identification de l'usure globale du pneumatique est effectuée en roulage sans le besoin d'un arrêt pour réaliser une inspection manuelle ni modifier structurellement le pneumatique pour l'interroger par des moyens de mesures sans contact. De ce fait, le procédé n'est ni intrusif par rapport au produit pneumatique, ni contraignant pour l'utilisateur du véhicule.

Préférentiellement, la fonction de transfert F de l'ensemble monté dépendant du vieillissement D des au moins un des composants de l'ensemble monté, la méthode comprend la détermination du vieillissement D1 des au moins un composants de l'ensemble monté dans un même cycle d'état de l'ensemble monté et l'obtention de la seconde rigidité longitudinale $K_{xx}^{ref}$ est effectuée en employant le vieillissement D1 des au moins un composants de l'ensemble monté.

Le vieillissement D des composants de l'ensemble monté et tout particulièrement ceux comprenant des matériaux à base de mélange élastomère comme le pneumatique influence de manière non négligeable la rigidité longitudinale Kxx de l'ensemble monté. En effet, le vieillissement de ces matériaux modifie la rigidité des composants associés à ces matériaux. Cela influence la valeur de rigidité longitudinale d'un ensemble monté entre deux états de vieillissement de ce même ensemble monté. De ce fait, le vieillissement est aussi un facteur influent. Cependant, le vieillissement est lié au cycle d'état de l'ensemble monté et non pas au cycle de mesure. De ce fait, c'est un facteur influent de la rigidité longitudinale Kxx du second groupe H lié à l'état de l'ensemble monté. Par conséquent, la détermination du vieillissement des composants de l'ensemble monté est à effectuer de manière moins fréquente que les facteurs du premier groupe de facteurs influents.

Selon un mode de réalisation particulier, le vieillissement D1 des au moins un composants de l'ensemble monté est déterminé par au moins une des grandeurs comprises dans le groupe comprenant l'âge, le kilométrage global parcouru ou le nombre de cycles effectués, l'historique du kilométrage global parcouru ou des cycles effectués, la sollicitation thermomécanique cumulée subie, l'historique des sollicitations thermomécaniques subies, la condition environnementale cumulée définie par les paramètres compris dans le groupe comprenant température ambiante, taux d'humidité, le niveau d'ozone et l'historique des conditions environnementales subies.

En première approximation le vieillissement d'un composant, en particulier ceux comprenant des mélanges élastomères, s'apparente à l'âge des composants structurels de l'ensemble monté qui peuvent être renseignés dans les données du véhicule.

En effet, le vieillissement de l'ensemble monté et tout particulièrement celui du pneumatique peut être évalué à l'aide d'un ou plusieurs paramètres parmi la liste précédente. Le modèle le plus élémentaire est de prendre en compte uniquement l'âge du pneumatique au travers de sa date de fabrication. Cette donnée est accessible via des vecteurs d'identification présents sur les composants eux-mêmes comme des codes-barres, des QR codes ou tout autre vecteur physique. De plus, certains vecteurs physiques sont des objets électroniques communément appelés RFID (acronyme en anglais de Radio Frequency Indentification) qui peuvent contenir l'information et la communiquer par radiofréquence sur demande.

Un autre modèle élémentaire serait de prendre en compte le kilométrage global parcouru ou le nombre de cycles effectués par ce dernier. Un modèle spécifique de vieillissement des composants de l'ensemble monté et en particulier du pneumatique ou des produits à base de mélange élastomère serait de prendre en compte l'histoire des sollicitations thermomécaniques subies par le composant et en particulier l'histoire de la température en fonctionnement et lors du stockage du composant. Il est à noter qu'ici le vieillissement de l'ensemble monté se traduit par l'évolution de ces caractéristiques physiques, comme la rigidité par exemple, ce qui est particulièrement visible sur les composants structurels de l'ensemble monté à base de mélange élastomère.

Avantageusement, l'obtention de la fonction de transfert F, et de la même façon, l'obtention de la fonction de passage β, est effectuée au travers d'une campagne de caractérisation comprise dans le groupe comprenant simulation numérique et mesures expérimentales.

Cette fonction de transfert F, et aussi la fonction de passage β, nécessite des évaluations de rigidité longitudinale Kxx de l'ensemble monté sur un même sol de référence. Ces évaluations peuvent être faites expérimentalement sur un même sol en faisant varier les divers paramètres influents soit à l'aide d'un moyen de déplacement de l'ensemble monté comme un véhicule ou une remorque soit sur un banc de mesure. De même, ces évaluations peuvent être simulées numériquement en modélisant, pour chaque évaluation, un même sol de référence. Cette seconde option est peu onéreuse lorsque l'on doit réaliser les fonctions de transfert F pour l'ensemble de la gamme dimensionnelle d'un modèle de pneumatique ou pour divers composants d'ensemble monté. Bien entendu, il est possible de mixer les deux types de caractérisation afin de tout d'abord valider un modèle numérique sur une dimension de pneumatique ou un ensemble monté particulier et puis étendre la caractérisation numériquement sur la gamme dimensionnelle du pneumatique ou des variantes des composants structurels de l'ensemble monté.

Très avantageusement, l'obtention de la fonction de transfert F est effectuée sur un sol macrolisse.

On entend ici par le terme « sol macrolisse », les caractéristiques spécifiques d'un sol à une échelle de l'ordre du millimètre. Ces caractéristiques spécifiques sont des seuils à partir desquels le sol est considéré comme ne représentant plus de rugosité à cette échelle. Si on prend comme caractéristique la PMT (acronyme de Profondeur Moyenne de Texture) par une mesure volumétrique selon la norme NF EN 13036-1, la caractéristique peut être le diamètre moyen du cercle formé par les billes de verre calibrées de la méthode pour une quantité élémentaire de ces billes ou la quantité de billes déposées puis arasées pour former un cercle d'un diamètre 0,2 mètre déterminé sur ce sol. On peut aussi prendre comme indicateur de la rugosité du sol, la PMP (acronyme de Profondeur Moyenne de Profil) selon la norme NF EN 13473-1. Enfin on peut aussi considérer comme indicateur de la macrorugosité du sol le diamètre moyen des indenteurs et/ou leur densité spatiale et/ou leur hauteur obtenus par une mesure profilométrique tridimensionnelle du sol comme illustré dans la demande FR2948764A1 de la Demanderesse, la macrorugosité du sol sera une densité d'indenteurs supérieure à Densmax, un diamètre moyen de ces indenteurs inférieur à Diammin et une hauteur moyenne inférieure à Hautmin. L'identification de ces divers seuils peut être obtenue en appliquant les méthodes de caractérisation de la macrorugosité du sol sur un sol adhérisé de type 120 de 3M ou 180 de Norton considéré comme macrolisse à titre d'exemple.

En effet, si le sol présente une faible macrorugosité, la rigidité longitudinale Kxx de l'ensemble monté est maximale. Cela permet alors d'avoir une plus forte dynamique de réponse dans les variations des paramètres influents facilitant ainsi l'identification de la fonction de transfert F. De plus, la simulation numérique d'un sol lisse ou macrolisse est élémentaire permettant d'optimiser les temps de calcul en simulation numérique. Toutefois, en campagne expérimentale en particulier sur banc d'essai de type flattrack par exemple, l'utilisation d'un film adhérisé sur la piste métallique reproduisant le sol lisse est nécessaire pour obtenir un certain niveau d'adhérence dans la zone de contact entre la bande de roulement du pneumatique et le volant du banc de mesure.

Préférentiellement, l'obtention de la fonction de transfert F est effectuée en employant un modèle mathématique du type :

$$F = \left( \prod{}^{j} \left( \frac{M^{j}}{M_{0}^{j}} \right)^{\alpha_{j}} \right) * \left( \frac{E}{E_{ref}} \right)^{\alpha}$$

Où

$M_{0}^{j}$ et $E_{ref}$, sont des constantes :

$\alpha_{j}$, et $\alpha$ sont des réels ;

$M^{j}$ sont des facteurs influents ;

E est l'épaisseur de la bande de roulement

Cette forme de fonction de transfert est adaptée pour caler les résultats expérimentaux, elle permet de couvrir une large gamme de valeurs pour l'ensemble des paramètres influents au lieu de se focaliser aux alentours d'une position nominale par le biais d'un développement limité par exemple. De plus, les paramètres influents sont ici indépendants les uns des autres facilitant ainsi l'identification des paramètres de la fonction de transfert F. Enfin, cette fonction de transfert est focalisée sur l'interaction d'un seul sol, le sol de référence, avec l'ensemble monté. On considère que cette sensibilité de la rigidité longitudinale Kxx à ce couplage entre l'ensemble monté et les divers sols est intégrée seulement dans la fonction de passage β.

Selon un mode de réalisation particulier, l'obtention de la fonction de passage β comprend les étapes suivantes :

- - Effectuer un ensemble de cycles de mesures associés à diverses portions de route , les portions de route étant sèches, dans un même cycle d'état de l'ensemble monté ;

- Obtenir pour chaque cycle de mesures la première rigidité longitudinale $k_{xx}^{reel}$ sur sol réel et la seconde rigidité longitudinale $k'_{xx}^{ref}$ sur sol de référence ;

- Obtenir pour chaque cycle de mesures un écart X entre la première et la seconde rigidité longitudinale ;

- Définir un cycle de mesures cible parmi l'ensemble des cycles de mesures en identifiant celui qui a le plus faible écart X ;

- Affecter la fonction identité à la fonction de passage β définie pour la portion de route associée au cycle de mesure cible.

C'est un cas particulier d'utilisation de la méthode où la fonction de transfert F est évaluée sur un sol macrolisse. Ainsi, en recherchant dans un même cycle d'usage de l'ensemble monté, la portion de route correspondante au plus faible écart entre la première et la seconde rigidité longitudinale, on peut en multipliant les mesures de rigidités longitudinales tendre fortement voire atteindre une portion de route où cet écart sera nul correspondant à un sol macrolisse. La probabilité de 100% sera atteinte pour un nombre infini de mesures de rigidité sur un ensemble de portions de route représentatives de la diversité des sols. Ainsi, la fonction de passage β pour cet ensemble monté sur cette portion de route minimisant l'écart X tend aussi vers l'identité. L'identification de l'épaisseur E de la bande de roulement est directement obtenue par l'identification des paramètres influents du premier groupe G.

On entend ici par la fonction identité que quel que le jeux de paramètres de la fonction, ici la fonction de passage β, celle-ci renvoie toujours le même résultat, ici un scalaire β1 qui vaut un.

Bien entendu, il est important d'associer à la fonction de passage β délinie pour cette portion de route, la localisation géographique de cette portion de route afin de pouvoir réutiliser cette grandeur intrinsèque à la chaussée dans les évaluations futures de l'usure du pneumatique. Généralement, la localisation de cette portion de route est obtenue au travers de la donnée GPS délivrée par le véhicule.

Selon un mode de réalisation préférentiel, l'obtention de la fonction de passage β comprend les étapes suivantes :

- Obtenir une épaisseur moyenne E2 de la bande de roulement ;

- Effectuer un cycle de mesures associé à une portion de route, ladite portion de route étant sèche dans un même cycle d'état de l'ensemble monté

- Obtenir la première rigidité longitudinale $k_{XX}^{reel}$ sur sol réel ;

- Obtenir une troisième rigidité longitudinale $k''_{XX}^{ref}$ sur sol de référence évaluée à l'aide de la fonction de transfert F alimentée par des paramètres comprenant les paramètres influents obtenus lors du cycle de mesures et l'épaisseur E2 de la bande de roulement ;

- Obtenir un coefficient λ comme le rapport de la première rigidité longitudinale $k_{XX}^{reel}$ sur sol réel sur la troisième rigidité longitudinale $k''_{XX}^{ref}$ sur sol de référence ;

- Déterminer la fonction de passage β associée à la portion de route passant par le point (λ, P1, Z1, T1) associé au cycle de mesures.

Ainsi, quelle que soit la hauteur E de la bande de roulement du pneumatique, c'est-à-dire totale ou partielle, il est possible d'identifier la fonction de passage β associée à une portion de route apte à la mesure de rigidité longitudinale sur véhicule en employant la fonction de transfert F de l'ensemble monté. Cette évaluation de la hauteur E de la bande de roulement peut être obtenue par une estimation comme par exemple lorsque le pneumatique n'a pas encore ou faiblement roulé ou par une mesure au travers d'une mesure ponctuelle à l'aide d'un instrument métrologique manuel ou indirect via un dispositif électronique de type « scanner drive over ».

Bien entendu, il est important d'associer à la fonction de passage β de cette seconde portion de route, la localisation géographique de cette seconde portion de route afin de pouvoir réutiliser cette grandeur intrinsèque à la chaussée dans les évaluations futures de l'usure du pneumatique voire d'autres pneumatiques. Généralement, la localisation de cette seconde portion de route est obtenue au travers de la donnée GPS délivrée par le véhicule.

Selon un troisième mode de réalisation préférentiel, l'obtention de la fonction de passage β comprend les étapes suivantes :

- Obtenir une fonction de passage β2 de l'ensemble monté définie pour une seconde portion de route;

- Obtenir pour le sol de la seconde portion de route un vecteur M2 caractérisant la macrorugosité du sol relativement à un sol de référence ;

- Obtenir pour le sol de la portion de route un vecteur M caractérisant la macrorugosité du sol relativement à un sol de référence ;

- Déterminer la fonction de passage β de l'ensemble monté définie pour la portion de route par une relation liant la fonction de passage β2 et la position relative du vecteur M2 par rapport au vecteur M.

On entend ici par le terme « macrorugosité », les caractéristiques structurelles du sol à une échelle de l'ordre du millimètre. Chaque caractéristique représente une variable du vecteur M associé à la macrorugosité globale du sol. Bien entendu, le vecteur peut se limiter à un scalaire représentant par exemple la PMT (acronyme de Profondeur Moyenne de Texture). Ce peut aussi être un vecteur à n dimensions si on prend en compte un certain nombre de descripteurs de la macrorugosité du sol comme le nombre d'indenteurs par unité de surface, le rayon moyen de ces indenteurs et la hauteur moyenne de ceux-ci.

Selon un mode de réalisation préférentiel, la méthode d'estimation du niveau d'usure globale comprend les étapes complémentaires :

- Déterminer une variation ΔU entre au moins deux épaisseurs E de la bande de roulement du au moins un paramètre U lié à l'utilisation du pneumatique compris dans le groupe comprenant cycles de rotation effectués, kilomètres parcourus, temps, temps d'utilisation du pneumatique ;

- Déterminer au moins une vitesse V d'usure globale du pneumatique définie par le rapport entre la variation ΔE de l'épaisseur entre les au moins deux épaisseurs E de la bande de roulement et la variation ΔU du au moins un paramètre U lié à l'utilisation du pneumatique.

Bien que l'estimation de l'usure globale du pneumatique soit une donnée indispensable, il convient de déterminer la vitesse d'usure globale du pneumatique afin d'anticiper au besoin un niveau d'usure du pneumatique lors d'une future estimation. Cela permet d'enrichir si besoin le modèle d'estimation de l'usure globale en perfectionnant par exemple l'identification de la fonction de passage β. En effet, la fonction de passage β est dépendante de la nature du sol mais aussi de la rigidité de la bande de roulement du pneumatique qui impactera l'interaction entre l'ensemble monté et le sol. Or, la rigidité de ce composant du pneumatique dépend à la fois des caractéristiques des matériaux le constituant mais aussi de sa géométrie et tout particulièrement de son épaisseur.

Bien entendu, cette vitesse d'usure globale n'est fonction que de la variation à la fois de l'épaisseur E de la bande de roulement entre deux états du pneumatique et de la variation d'un paramètre lié à l'utilisation du pneumatique. Parmi les paramètres les plus pertinents liés à l'utilisation du pneumatique, le nombre de cycles effectués ou le kilométrage parcouru entre les deux estimations de l'épaisseur E peuvent être avantageusement couplés avec la durée totale ou la simple durée d'utilisation du pneumatique entre les deux estimations de l'épaisseur E.

L'invention porte aussi sur une méthode de prédiction de fin de vie d'un pneumatique ayant une bande de roulement située radialement extérieurement par rapport à un axe naturel de rotation du pneumatique, présentant une épaisseur moyenne E, une épaisseur caractéristique E0 et une épaisseur fin de vie $E^{fin}$, comprenant les étapes suivantes :

- Déterminer au moins une épaisseur E1 de la bande de roulement d'un pneumatique au cours d'au moins un premier cycle d'état du pneumatique d'un premier ensemble monté comprenant ledit pneumatique en employant la méthode d'estimation de l'usure globale d'un pneumatique ;

- Déterminer une vitesse V1 d'usure globale du pneumatique associée à la au moins une épaisseur E1 en employant la méthode d'estimation de l'usure globale d'un pneumatique ;

- Déterminer une valeur U1 du paramètre U lié à l'utilisation du pneumatique, associée à la au moins une épaisseur E1 ;

- Déterminer la prédiction fin de vie du pneumatique à l'aide d'une valeur $U^{fin}$ du paramètre U définie par une seconde fonction liant la vitesse V1 d'usure globale, la au moins une épaisseur E1 associée à la valeur U1 et l'épaisseur fin de vie $E^{fin}$.

Une première estimation de la prédiction de fin de vie du pneumatique est déterminée au travers d'une valeur $U^{fin}$ du paramètre décrivant l'utilisation du pneumatique. En extrapolant la vitesse V1 d'usure globale attachée à une estimation E1 de l'épaisseur de la bande de roulement à laquelle est associée une valeur U1 du paramètre lié à l'utilisation du pneumatique, il est possible d'identifier une valeur $U^{fin}$ correspondant à la valeur seuil du paramètre U lié à l'utilisation du pneumatique.

Bien entendu, plus la prédiction de fin de vie est effectuée proche de la valeur $U^{fin}$, plus la qualité de la prédiction s'en trouve améliorée. Cependant cette méthode permet de renseigner régulièrement l'usager du véhicule ou un intermédiaire du potentiel d'utilisation du pneumatique.

La rapidité de calcul de la prédiction fin de vie associée à la simplicité de mise en oeuvre de la méthode de prédiction de l'usure globale sur laquelle elle repose confère un intérêt certain à cette méthode pour planifier et organiser les opérations de maintenance du véhicule concernant l'usure des pneumatiques.

L'invention porte aussi sur un système pour la mise en oeuvre de la méthode d'estimation du niveau d'usure globale d'un pneumatique et/ou de la méthode de prédiction de fin de vie d'un pneumatique comprenant :

- un véhicule équipé d'au moins un ensemble monté comprenant ledit pneumatique pouvant être mis en condition de roulage ;

- un moyen de stockage,

- un moyen de calcul,

- un moyen d'analyse,

- un premier moyen de transmission entre le véhicule et le au moins un moyen de stockage,

- un deuxième moyen de transmission entre le au moins un moyen de stockage et le au moins un moyen de calcul,

- un troisième moyen de transmission entre le moyen d'analyse et le moyen de stockage ou le moyen de calcul,

- des données d'entrée issues du véhicule,

- des données intermédiaires stockées dans le moyen de stockage pouvant être transmises par un système extérieur,

- un résultat de sortie issu du moyen de calcul, et

- une décision issue du moyen d'analyse.

Les données d'entrée sont comprises dans le groupe comprenant la charge Z1, la température T1, la pression P1, l'effort Fx, le taux de glissement g%, les paramètres Q1 et Q2, le paramètre U lié à l'utilisation du pneumatique et la variation ΔU du paramètre U. Les données intermédiaires sont comprises dans le groupe comprenant l'épaisseur E2, le vieillissement D1 du composant de l'ensemble monté, l'épaisseur caractéristique E0 et l'épaisseur fin de vie $E^{fin}$ de la bande de roulement du pneumatique, la fonction de transfert F de l'ensemble monté, la fonction de passage β de l'ensemble monté associée à la portion de route , le vecteur M caractérisant la macrorugosité du sol de la portion de route par rapport à un sol de référence. Le résultat de sortie est compris dans le groupe comprenant l'épaisseur E de la bande de roulement du pneumatique, la vitesse V d'usure globale du pneumatique, la prédiction de fin de vie $U^{fin}$ du pneumatique associée au paramètre U, la première rigidité longitudinale $K_{XX}^{reel}$, la seconde rigidité longitudinale $K_{XX}^{ref}$, la troisième rigidité longitudinale $k"_{XX}^{ref}$. La décision exprimant l'état d'usure du pneumatique est transmise et/ou stockée dans le moyen de stockage à l'aide d'un quatrième moyen de transmission.

Ce système permet de mettre en place les procédés de l'invention. En effet, le véhicule équipé de moyens d'obtention des données d'entrée transmet ces données à un moyen de stockage. La communication entre le véhicule et le moyen de stockage peut être filaire ou radiofréquence comme par exemple de type Bluetooth, Wi-Fi, GSM/GPRS ou toute autre bande de fréquence ou technologie de radiocommunication suivant une norme nationale, régionale ou internationale. Le moyen de stockage peut être aussi en communication avec un système extérieur comme un scanner drive over, une base de données ou tout autre système d'obtention de grandeurs ou de stockage de grandeur. La communication entre le moyen de stockage et le système extérieur s'effectue indépendamment par voie filaire ou par communication radiofréquence. Ce moyen de stockage est lui en communication avec un moyen de calcul effectuant les opérations de calcul requises par les procédés de l'invention. Ces opérations de calculs restituent à la fin d'un processus un résultat et sont alimentées par des paramètres d'entrée qui sont des données d'entrée ou des données intermédiaires stockées sur le moyen de stockage ou des résultats issus d'un premier calcul.

Le système dispose aussi d'un moyen d'analyse qui récupère des paramètres d'entrée de type résultat classiquement qui sont issus du moyen de stockage ou du moyen de calcul et restitue une décision sur le niveau d'usure ou la prédiction de fin de vie de l'enveloppe pneumatique. Cette décision peut alternativement être transmise ou stockées dans le moyen de stockage par voie de communication selon les actions à entreprendre selon la nature de la décision comme par exemple, une usure à mi-hauteur ou une usure à la limite. L'ensemble de la communication arrivant ou partant du moyen d'analyse est de nature filaire ou radiofréquence.

Dans un mode de réalisation particulier, l'ensemble monté étant équipé d'un dispositif de mesure comprenant un moyen de stockage et d'un moyen de transmission vers le véhicule ou le au moins un moyens de stockage, une partie des données d'entrée sont issues de l'ensemble monté.

Dans la cas où l'ensemble monté est équipé de capteur de mesure, permettant l'obtention de, par exemple, la pression de gonflage, la température de la cavité fluide de l'ensemble monté, la charge Z portée, les efforts au centre roue, le kilométrage parcouru ou le nombre de cycles effectués, équipé de moyen de stockage des données de mesure et de moyen de communication généralement par radiofréquence de type Bluetooth, Wi-Fi pour une communication vers le véhicule ou GSM/GPRS et réseau bas débit pour une communication vers un élément extérieur au véhicule qui pourrait, par exemple, être le moyen de stockage, l'ensemble monté devient une source secondaire voire la source principale de données d'entrée. L'ensemble monté, dans ce cas, se substitue partiellement ou totalement au véhicule pour ses fonctions au sein du système de mise en oeuvre des procédés de l'invention.

Avantageusement, le quatrième moyen de transmission comprend un moyen de transmission vers le véhicule assurant la communication de la au moins une décision.

Si la décision issue du moyen d'analyse doit être transmise à un décideur comme le conducteur du véhicule en raison du niveau de risque associée à l'état de l'enveloppe pneumatique, il faut que le système puisse transmettre la décision directement au véhicule par le biais d'une communication de tout type.

Préférentiellement, le quatrième moyen de transmission comprend un moyen de transmission vers un tiers tel que le gestionnaire de flotte de véhicule assurant la communication de la au moins une décision.

Si la décision issue du moyen d'analyse n'a pas de caractère urgent par rapport à la sécurité de l'ensemble monté mais nécessite une prise de décision par un décideur sur des actions à venir, comme par exemple, des opérations de maintenance préventive, la décision doit être transférée au plus vite vers ce décideur pour organiser la maintenance ou les opérations à venir. Dans les autres cas, la décision est transmise au moyen de stockage pour une traçabilité de l'évolution de l'usure ou de la prédiction fin de vie de l'ensemble monté.

Selon un mode de réalisation très particulier une partie du moyen de stockage et/ou une partie du moyen de calcul et/ou une partie du un moyen d'analyse sont localisées sur le véhicule ou sur l'ensemble monté.

C'est un cas particulier où le véhicule est l'hôte physique des divers éléments du système de mise en oeuvre. Ainsi, le véhicule dispose de moyen de communication vers des systèmes extérieurs pour avoir accès aux divers paramètres d'entrée du procédé. Il dispose aussi d'un calculateur effectuant les opérations courantes pour l'obtention des résultats des méthodes et d'un moyen d'analyse pour détecter les états critiques de l'ensemble monté. Les décisions sont remontées au conducteur ou au constructeur pour soit planifier les opérations de maintenance, soit adapter l'usage du véhicule à l'état d'usure du pneumatique par exemple.

**Description brève des dessins**

L'invention sera mieux comprise à la lecture de la description qui va suivre. Cette application est donnée uniquement à titre d'exemple et faite en se référant aux figures annexées dans lesquelles :

- Les figures indexées 1 présentent des courbes de caractérisation de la rigidité longitudinale $K_{XX}^{ref}$ selon les paramètres d'usage d'un ensemble monté,
- La figure 2 présente des caractérisations de la rigidité longitudinale $K_{XX}^{ref}$ suivant l'épaisseur E de la bande de roulement d'un ensemble monté et l'effet du sol ;
- La figure 3 présente des variations des courbes Fx(g%) d'un ensemble monté sur véhicule selon deux états du pneumatique sur un même sol réel,
- La figure 4 présente la prédiction fin de vie d'un pneumatique évaluée à l'aide de la méthode.
- La figure 5 est un synoptique des procédés de l'invention.
- La figure 6 est un schéma du système de mise en oeuvre des procédés de l'invention.

**Description détaillée de modes de réalisation**

Les figures indexées de 1a à 1c présentent une illustration des courbes de caractérisation d'un ensemble monté constitué par un pneumatique de dimension 235/35R19 de marque Michelin de la gamme PilotSport 4S monté sur une roue machine en tôle de type 8.5J19 ET0. L'ensemble monté ainsi constitué est gonflé en condition nominale à 2,6 bars sous une charge nominale de 450 kg. Les caractérisations sont effectuées sur banc de test de type Flattrack muni d'un sol adhérisé 120 de la marque 3M. L'ensemble monté subit un cycle de sollicitations constitués de freinages et d'accélérations en ligne droite après un pré roulage de 20 minute de l'ensemble monté sur un cycle de sollicitations modérées. Ce pré roulage permet de mettre thermo mécaniquement l'ensemble monté en condition thermique stabilisée.

Les mesures de la température et de la pression de l'ensemble monté s'effectuent par l'intermédiaire d'un TMS placé sur la gomme intérieure du pneumatique au droit du sommet de telle manière que le capteur soit sensiblement dans le plan médian du pneumatique. La charge subie par l'ensemble monté est appliquée à l'aide du vérin du banc de mesure où un moyeu dynamométrique mesure la force verticale Fz appliquée ainsi que les composantes longitudinale Fx et axiale $F_Y$. La mesure s'effectue à effort imposé en pilotant la force verticale Fz appliquée. Une variation de couple autour de l'axe de rotation de l'ensemble monté est appliquée au centre roue de l'ensemble monté par l'intermédiaire du banc de mesure. Le couple appliqué est mesuré à l'aide du moyeu dynamométrique. De plus, la position de l'axe de rotation de l'ensemble monté par rapport au sol de roulage est mesurée ainsi que la vitesse de rotation du centre roue de l'ensemble monté au travers d'un codeur monté entre le stator et le rotor de l'axe de rotation du banc de mesure. Enfin, le défilement du sol est aussi piloté par la machine. En plus, un capteur de déplacement mesure la vitesse de défilement du sol. La présence du revêtement adhérisé permet à la fois d'éviter le glissement du pneumatique sur le sol tout en respectant la condition optionnelle de rouler sur un sol macrolisse.

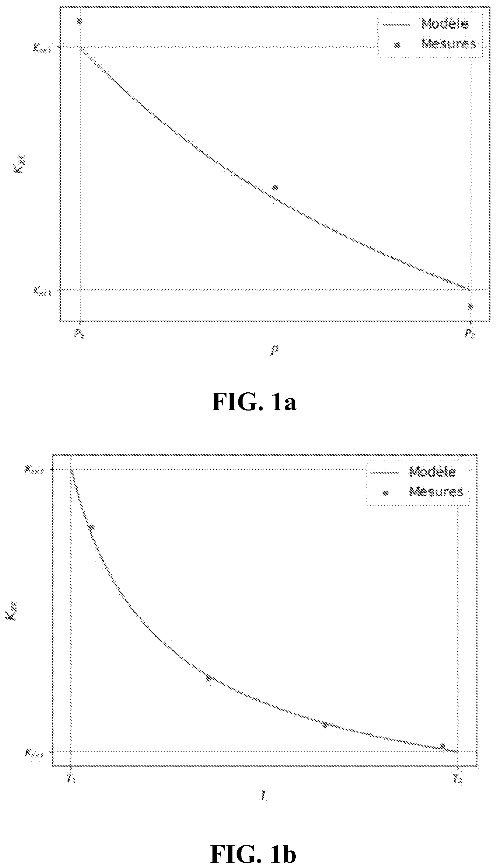

La [Fig.1a] présente pour cet ensemble monté, les caractérisations expérimentales, représentées par les points, obtenues sur un sol de référence qualifié de macro lisse pour l'ensemble monté précité en faisant varier la pression de gonflage P de l'ensemble monté entre trois pressions de gonflage possibles selon la norme ETRTO (acronyme anglais de European Tyre and Rim Technical O...) pour cet ensemble monté pour plusieurs conditions de charge et de température maîtrisées. La courbe continue est un modèle de fonction de transfert F (1005) du type paramètres influents indépendants qui minimise l'erreur entre les points expérimentaux et le modèle mathématique. On observe bien une dépendance de la deuxième rigidité longitudinale $K_{XX}^{ref}$ à la pression de gonflage P. Les points de mesure obtenus dans des conditions métrologiques maitrisées permettent d'identifier les divers paramètres de la fonction de transfert F (1005) liée au paramètre de la pression de gonflage.

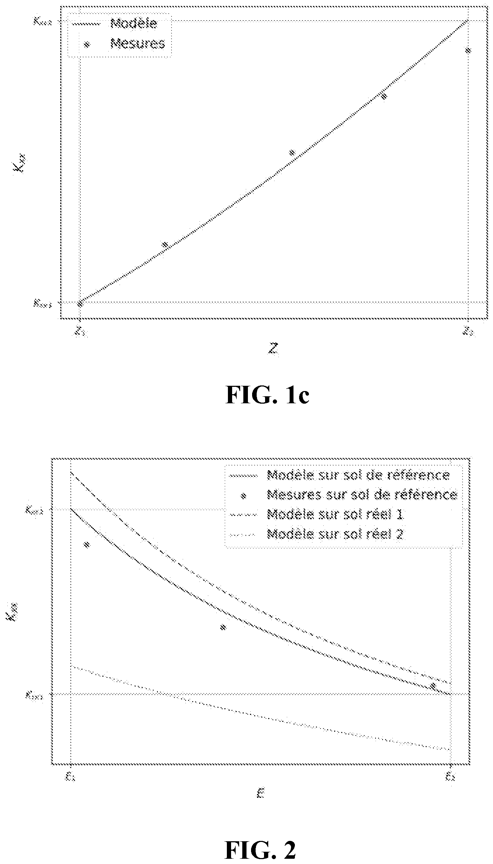

Les [Fig.1b] et [Fig.1c] représentent les caractérisations du même ensemble monté effectuées sur le banc de mesure de type Flattrack en faisant varier respectivement la température et la charge appliquée. Les variations de température sur la figure 1b correspondent à des variations de température de l'ensemble monté que l'on peut rencontrer classiquement selon des conditions d'usage diversifiées. Elles sont obtenues en faisant varier la température régulée de la cellule accueillant le banc de mesure et en appliquant une animation plus ou moins soutenue de la sollicitation appliquée au pneumatique. Pour les températures difficilement maitrisables sur banc de mesure, l'utilisation d'un modèle de simulation numérique de l'ensemble monté a été employée. Dans une première phase, le modèle numérique, en particulier celui du pneumatique a été validé sur des mesures expérimentales. Dans une seconde phase, des simulations numériques ont été effectuées pour des sollicitations thermiques difficilement reproductibles expérimentalement. Pour le modèle numérique, le sol est un sol lisse adhérent représentatif du sol adhérisé sur banc de mesure.

Les variations de charge pour la [Fig.1c] sont obtenues en modifiant la charge pilotée du banc de mesure en respectant les charges admissibles par l'ensemble monté selon la norme ETRTO.

Les courbes continues sont le modèle mathématique de la fonction de transfert F (1005) identifiée pour cet ensemble monté en considérant dans le jeu des paramètres influents, que les paramètres sont indépendants les uns des autres. Le recalage du modèle mathématique sur les diverses courbes expérimentales permet l'identification unique des divers coefficients de la fonction de transfert F (1005) de l'ensemble monté sur un sol de référence de type macrolisse.

Bien entendu, les caractérisations pour les paramètres influents du premier groupe G s'effectuent sur au moins trois niveaux différents de chaque paramètre influent du second groupe H comme le vieillissement et le niveau d'usure globale du pneumatique et du premier groupe G autre que celui que l'on cherche à caractériser.

Enfin, ayant préalablement validé le modèle numérique du pneumatique sur des mesures expérimentales d'un ensemble monté particulier, il est préférable de réutiliser ce modèle numérique du pneumatique afin de constituer une campagne de simulation numérique en modifiant les autres composants de l'ensemble monté, les sollicitations thermomécaniques appliquées et les divers états de l'ensemble monté. Les simulations numériques sont moins consommatrices en temps et en ressources que les campagnes expérimentales après la phase de validation du modèle numérique du pneumatique.

La [Fig.2] présente l'évolution de la deuxième rigidité longitudinale $K_{XX}^{ref}$ sur un sol de référence obtenu pour un ensemble monté comprenant un pneumatique de type Energy Saver en dimension 195/65R15 monté sur une roue alliage 6.5J15 ET23. Les mesures ont été faites sur une remorque analytique de type trailer lors de roulage sur les pistes d'essai dont la macrorugosité est contrôlée par profilométrie. Dans ce cas, le paramètre variable est l'épaisseur moyenne E de la bande de roulement en contrôlant par ailleurs les divers autres paramètres influents de la rigidité longitudinale tels que la charge appliquée, la pression de gonflage et la température de l'ensemble monté. Le banc de mesure mobile fait subir à l'ensemble monté des phases d'accélérations variées aussi bien en accélération qu'en décélération en appliquant un couple à l'ensemble monté selon l'axe naturel de rotation du pneumatique. La variation de l'épaisseur moyenne de la bande de roulement a été obtenue par le rabotage automatique des pneumatiques dans un même cycle de préparation des pneumatiques. Ainsi, le vieillissement des divers pneumatiques est similaire. L'altitude de l'axe naturel de rotation de l'ensemble monté a été adaptée pour que la charge appliquée sur chaque ensemble monté soit identique. La vitesse du pneumatique correspond à la vitesse linéaire du banc de mesure mobile via l'information de vitesse du banc mobile récupéré sur le CAN bus. Un top roue et un moyen de position pour mesurer la hauteur du centre roue par rapport au sol de l'ensemble monté complètent l'équipement.

En général pour les pneumatiques équipant les véhicule de tourisme et les camionnettes, le couple appliqué au centre de roue est de l'ordre de 30 daN.m afin de s'assurer que le pneumatique ne glisse pas sur le sol ce qui revient à dire que le coefficient de glissement du matériau de la bande de roulement en condition d'usage par rapport au sol ne soit pas atteint. Bien entendu, ce couple appliqué est à adapter selon la catégorie de pneumatique à mesurer.

Les mesures discrètes, représentées par les points, correspondent aux caractérisations expérimentales de la rigidité longitudinale estimée lors des essais sur le sol de référence de la piste d'essai. La courbe en trait continu correspond à la deuxième rigidité longitudinale évaluée à l'aide de la fonction de transfert F (1005) de l'ensemble monté corrigée par une fonction de passage β (1004) associée aux sols de référence. Les deux autres courbes, en pointillés ou points continus, correspondant aux deuxièmes rigidités longitudinales évaluées à l'aide de la fonction de transfert F (1005) de l'ensemble monté corrigées chacune par une fonction de passage β (1004) associée aux sols réels 1 ou 2. Ici, la fonction de transfert F (1005) employée est aussi le produit de fonctions puissances des divers paramètres indépendants. Les fonctions de passage β (1004) permettent d'estimer les rigidités longitudinales sur sol réel en ne connaissant que la fonction de transfert F (1005) de l'ensemble monté. La fonction de passage β (1004), quel que soit le sol, est quasi constante ou dépend de l'épaisseur E de la bande de roulement pour un sol donné. Les divers sols sont des sols contrôlés en matière de rugosité qui permettent pour un même pneumatique d'obtenir une variété de fonction de passage β (1004) permettant de tenir compte de la nature du sol.

Bien entendu, il est possible d'obtenir une estimation de l'influence du vieillissement D de l'ensemble monté et en particulier du pneumatique en préparant des pneumatiques ayant subi des vieillissements différenciés par une méthode identique. Par exemple, en accélérant le vieillissement par des conditions de stockage spécifiques, en étuve par exemple à diverses températures, ou en effectuant des séances de roulages de plus ou moins fortes sollicitations thermomécaniques, on obtient des vieillissements différenciés entre les pneumatiques. Un rabotage des divers pneumatiques peut aussi être effectué dans ce cas afin d'obtenir une même épaisseur E de la bande de roulement avant la campagne de caractérisation pour l'identification de la fonction de transfert F (1005).

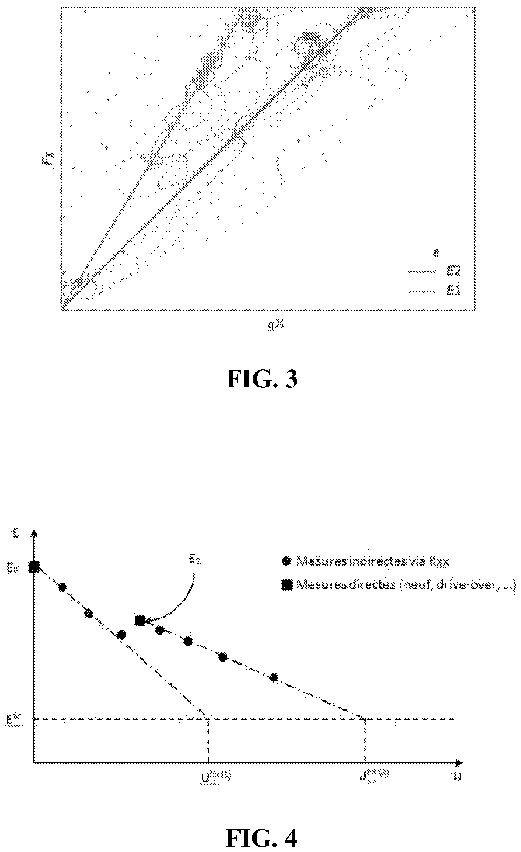

La [Fig.3] présente les courbes d'efforts Fx selon la direction longitudinale de l'ensemble monté en fonction du taux de glissement g% d'un ensemble monté constitué d'un pneumatique de dimension 235/35ZR19 de marque Michelin de la gamme PilotSport 4S monté sur une roue alliage de type 8.5J19 ET20. Cet ensemble monté est monté sur l'essieu avant d'un véhicule FOCUS ST de type traction de marque FORD .

Les mesures ont été faites sur une même portion de route pour deux états du pneumatique différents avec les mêmes conditions d'usage. Les points de mesure en gris représentent un état du pneumatique présentant une épaisseur E1 et un vieillissement D1 proches de l'état faiblement usé et jeune du pneumatique. Les points de mesures en noir représentent un second état du pneumatique correspondant à une épaisseur E2 et un niveau de vieillissement D2 correspondant à un état proche de la fin de vie du pneumatique et d'un vieillissement équivalent à une année d'usage moyen dans un pays tempéré. Seules les phases d'accélération sur le parcours jusqu'à des couples moteurs ne dépassant pas 35daN.m sont ici représentés afin de considérer que le pneumatique ne glisse pas sur la chaussée.

On estime ici, à l'aide des courbes continues définies comme étant la droite de régression linéaire des points de mesure de chaque état du pneumatique, les premières rigidités longitudinales (1009) sur sol réel des deux ensembles montés. On observe que le niveau de rigidité longitudinale sur sol réel est influencé par l'état du pneumatique, les autres paramètres étant considérés comme équivalents entre les deux états du pneumatique.

La [Fig.4] représente le suivi estimatif de l'usure globale d'un pneumatique par rapport à l'évolution d'un paramètre U lié à l'utilisation du dit pneumatique. Ce paramètre U peut être par exemple le kilométrage parcouru ou le nombre de cycles de rotation effectués par le pneumatique. L'estimation est faite par l'intermédiaire de l'obtention des rigidités longitudinales (1009, 1010) faites régulièrement au cours de l'utilisation du pneumatique qui sont représentées par les cercles pleins. En fonction de la nature de la bande de roulement du pneumatique et d'une estimation de la macrugosité du sol, une première fonction de passage β (1004) est identifiée sur une portion de route où est réalisée régulièrement la mesure des paramètres (1007, 1008) permettant l'obtention de la première rigidité longitudinale sur sol réel (1009) et de la deuxième rigidité longitudinale sur sol de référence (1010). Ainsi, la méthode (1000) selon l'invention permet d'estimer la variation de l'épaisseur moyenne de la bande de roulement au cours de l'utilisation du pneumatique par rapport à une épaisseur caractéristique E0 (1002). On peut alors estimer une vitesse d'usure V (1013) en prenant en compte au moins une variation de l'épaisseur moyenne $\Delta E$ de la bande de roulement entre deux obtentions de l'épaisseur moyenne (1011) comme par exemple l'état neuf et une mesure au cours de l'utilisation du pneumatique tout en connaissant la variation $\Delta U$ (1012) du paramètre U entre les deux épaisseurs moyennes prises en référence. La connaissance de l'épaisseur fin de vie $E^{fin}$ (1003) de la bande de roulement en dessous de laquelle les risques sécuritaires sont fortement accentués permet d'identifier une prédiction fin de vie selon le paramètre U nommée $U^{fin}$ (1015) à l'aide de la méthode (1100) de prédiction de fin de vie.

Bien entendu, la prédiction repose sur une hypothèse concernant la fonction de passage β (1004). Si au cours de l'utilisation du pneumatique, une mesure E2 de l'épaisseur moyenne de la bande de roulement est réalisée, lors d'un contrôle des pneumatiques chez un professionnel des véhicules de transport par exemple ou le passage sur un scanner drive over au niveau d'un péage d'autoroute ou d'un feu de signalisation, une nouvelle évaluation de la fonction de passage β (1004) de la portion de route peut être effectuée. Cela se traduit sur la courbe de la figure 4 par une discontinuité qui illustre juste la prise en compte de la vraie mesure E2 de l'épaisseur moyenne de la bande de roulement. Un nouveau point, représenté par un carré sur la figure 4 illustre ce point de mesure caractérisé par l'épaisseur E2 de la bande de roulement. Ensuite, le changement de pente qui peut intervenir provient d'un ajustement de la fonction de passage β (1004) liée à une portion de route. Cet ajustement est fait en identifiant un point de la fonction de passage β (1004) lié au niveau d'usure globale E2. Ensuite la nouvelle courbe obtenue avec une pente réadaptée, traduisant la vitesse V d'usure du pneumatique peut être projetée sur la droite définie par l'épaisseur fin de vie $E^{fin}$ (1003) de la bande de roulement pour estimer l'usure fin de vie $U^{fin}$ (1015) du pneumatique. Ici on suppose que l'estimation de l'usure globale du pneumatique (1011) est réalisée régulièrement sur une même portion de route localisée par une position géographique. Le changement de sol peut alors provenir par exemple du changement de la portion de route prise comme référence pour l'obtention de la première rigidité longitudinale (1009). Le changement de sol peut provenir aussi d'un ajustement de la fonction de passage β (1004) au cours de l'utilisation du pneumatique. Ainsi, à l'état neuf, on attribue une fonction forfaitaire à la fonction de passage β (1004) comme la fonction identité par méconnaissance de la nature du sol où est effectué le cycle de mesures. Au cours de l'utilisation du pneumatique, en employant une méthode de caractérisation de la fonction de passage β (1004) comme par exemple une vraie mesure de l'épaisseur E2 moyenne de la bande de roulement permettant d'identifier une fonction de passage β (1004) plus représentative de la nature du sol.

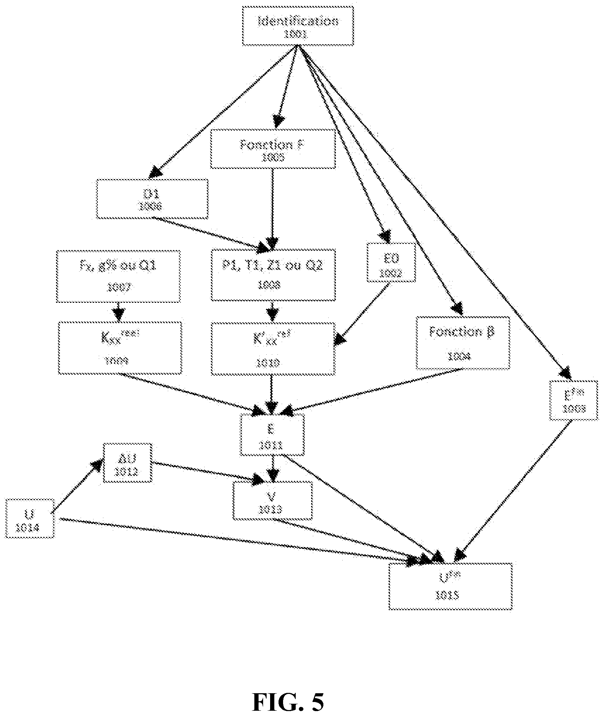

La [Fig.5] représente un synoptique intégrant la méthode (1000) d'estimation de l'usure globale et la méthode (1100) de prédiction fin de vie d'un pneumatique en condition de roulage sur un véhicule.

L'étape 1001 est l'identification de l'ensemble monté et tout particulièrement du pneumatique. Cette étape peut être faite par l'intermédiaire de l'affectation de l'identifiant des composants de l'ensemble monté associés au véhicule dans une base de données.

L'identification 1001 permet tout d'abord de définir une épaisseur caractéristique E0, correspondant à l'étape 1002, comme par exemple l'épaisseur à l'état neuf et l'épaisseur fin de vie $E^{fin}$ du pneumatique, correspondant à l'étape 1003. Ensuite, l'identification 1001 de l'ensemble monté permet aussi de connaître la rigidité de la bande de roulement du pneumatique ce qui permet d'estimer une ou quelques fonctions de passage β (1004) associées chacune à une portion de route caractérisée par une macrorugosité parmi une pluralité possible de fonctions de passage. A défaut l'utilisateur choisit une fonction de passage β (1004) dans la liste des fonctions de passage β potentielles qui soit représentative de la nature médiane des portions de route que rencontrera le véhicule. Le choix de la fonction de passage β correspond à l'étape 1004. Enfin, l'identification 1001 permet aussi de choisir la fonction de transfert F de l'ensemble monté correspondant à l'étape 1005. Cette fonction de transfert F est indispensable à la méthode d'estimation de l'usure globale.

Ensuite, au besoin, l'utilisateur renseigne l'état de vieillissement du pneumatique, correspondant à l'étape 1006. Celle-ci passe par l'identification (1001) du pneumatique afin de connaître l'historique de l'utilisation du pneumatique. Cet historique peut être renseigné au travers de l'interrogation d'une base de données. Cette base de données peut être externe à l'ensemble monté, présent sur le véhicule ou sur un serveur. Si l'état de vieillissement D1 (1006) du pneumatique ne concerne que l'âge du produit ou du nombre total de cycles effectués ou de kilomètres parcourus, l'information peut être présente sur l'ensemble monté au travers d'un dispositif électronique de type TMS ou TPMS. Nécessairement cette étape 1006 a lieu au cours d'un cycle d'état comprenant le cycle de mesures permettant l'évaluation de l'épaisseur moyenne du pneumatique.

Les prochaines étapes 1007 et 1008 sont effectuées au cours d'un cycle de mesures. La première étape 1007 consiste à obtenir lors d'un roulage en ligne droite sur une route sèche comprenant des phases d'accélération et de décélération, les efforts $F_X$ mesurés au centre roue de l'ensemble monté et le taux de glissement g% associés. A défaut des efforts directs Fx au centre roue, l'accès à des paramètres Q1 du véhicule permettant une estimation des efforts Fx au centre roue comme par exemple, le couple appliqué au centre roue autour de l'axe naturel de rotation de l'ensemble monté lors des phases d'accélération ou de décélération. L'étape 1008 correspond à l'obtention des paramètres d'usage de l'ensemble monté tels que la pression P1 de gonflage, la température T1 de l'ensemble monté et la charge Z1 appliquée ou les paramètres Q2 du véhicule permettant l'obtention de la charge Z1. Ces paramètres Q2 peuvent par exemple être la masse statique du véhicule, l'état de remplissage du réservoir de carburant et l'indication du nombre de ceintures de sécurité bouclées. Cette étape 1008 doit être effectuée juste avant, pendant ou après le roulage en ligne droite effectué à l'étape 1007.

L'étape 1009 suit chronologiquement l'étape 1007 bien qu'elle puisse être faite entre deux cycles de mesures. A partir des efforts Fx mesurés ou évalués et des taux de glissement g% associés lors du roulage sur la portion de route sèche, on trace un nuage de points associé au doublet de valeurs (Fx, g%). On retient de ce nuage de points que l'ensemble des points pour lesquels le pneumatique ne glisse pas sur la portion de route. Enfin on identifie la droite de régression linéaire de l'ensemble des points retenus. La pente de cette droite de régression correspond à l'estimation de la première rigidité longitudinale $K_{XX}^{reel}$ sur sol réel correspondant à la portion de route sèche.

L'étape 1010 suit chronologiquement l'étape 1008 couplée aux étapes 1002 et 1005. Ainsi, à partir de la fonction de transfert F (1005) choisie grâce à l'identification (1001) de l'ensemble monté, on estime une deuxième rigidité longitudinale sur sol de référence $K_{XX}^{ref}$ en alimentant la fonction de transfert F (1005) par les paramètres d'usage mesurés P1, TI et Z1 à l'étape 1008 et l'épaisseur caractéristique E0 choisie à l'étape 1002. En fonction de la sensibilité des caractéristiques de l'ensemble monté au vieillissement, cette étape 1010 peut aussi être couplée à l'étape 1006 dans laquelle une évaluation du vieillissent D1 de l'ensemble monté est effectuée.

L'étape suivante 1011 correspond à l'évaluation de l'épaisseur moyenne de la bande de roulement et par voie de conséquence de l'usure globale du pneumatique en comparant cette épaisseur moyenne évaluée avec les épaisseurs spécifiques du pneumatique telle qu'$E^{fin}$ et E0. Pour cela, une relation liant les résultats des étapes 1004, 1007 et 1008 est appliquée dont le résultat est l'épaisseur moyenne E associée au cycle d'état du pneumatique. Dans le cas où la deuxième rigidité longitudinale sur sol de référence $K_{XX}^{ref}$ (1010) est définie à l'aide d'une fonction de transfert F (1005) qui est le produit de fonctions puissances de paramètres influents indépendants comme revendiqué dans la revendication, l'épaisseur E peut alors être isolée de cette fonction de transfert F (1005) comme étant le produit de la constante $E_{ref}$ par la racine alpha du rapport entre la première rigidité longitudinale sur sol réel (1009) sur le produit de la fonction de passage β (1004) par la deuxième rigidité longitudinale sur sol de référence (1010). On fera l'hypothèse ici que la fonction de passage β (1004) est constante avec l'épaisseur moyenne de la bande de roulement. Dans le cas de paramètres influents dépendants les uns des autres, la relation d'identification de l'épaisseur moyenne E est plus complexe.

La prochaine étape 1012 consiste à obtenir la variation ΔU d'un paramètre U lié à l'utilisation du pneumatique entre deux obtentions de l'épaisseur moyenne de la bande de roulement. Le paramètre U peut être par exemple, le nombre de cycles de rotation autour de l'axe naturel de rotation ou le nombre de kilomètres parcourus par la bande de roulement ou le temps d'utilisation du pneumatique. Les deux obtentions (E1, E2) de l'épaisseur moyenne de la bande de roulement peuvent par exemple être deux évaluations effectuées par la méthode correspondant à deux états d'usure du pneumatique ou une évaluation de l'épaisseur moyenne de la bande de roulement combinée avec l'état neuf du pneumatique ou une mesure de l'épaisseur moyenne du pneumatique par un moyen de mesure externe.

L'étape suivante 1013 est l'évaluation de la vitesse V d'usure du pneumatique et plus précisément de la bande de roulement au niveau d'un point d'obtention de l'épaisseur moyenne de la bande de roulement du pneumatique. Pour cela il faut avoir à la fois la variation $\Delta U$ du paramètre U lié à l'utilisation du pneumatique obtenue à l'étape précédente et la variation de l'épaisseur moyenne $\Delta E$ correspondante. La variation $\Delta E$ est la différence entre les deux obtentions (E1, E2) ayant servi de points de référence à la variation $\Delta U$ effectuée à l'étape précédente. Le rapport de la variation de l'épaisseur moyenne $\Delta E$ sur la variation du paramètre lié à l'utilisation du pneumatique $\Delta U$ définit la vitesse V d'usure de l'épaisseur moyenne de la bande de roulement selon le paramètre U.

Bien entendu, la variation $\Delta U$ du paramètre U lié à l'utilisation du pneumatique peut aussi résulter de la différence des obtentions (U1, U2) du paramètre U effectuées à l'étape 1014.

Enfin, l'ultime étape 1015 consiste à évaluer la prédiction fin de vie $U^{fin}$ selon le paramètre U lié à l'utilisation du pneumatique. Celle-ci est obtenue en combinant les résultats des étapes 1003, 1011, 1013 et 1014.

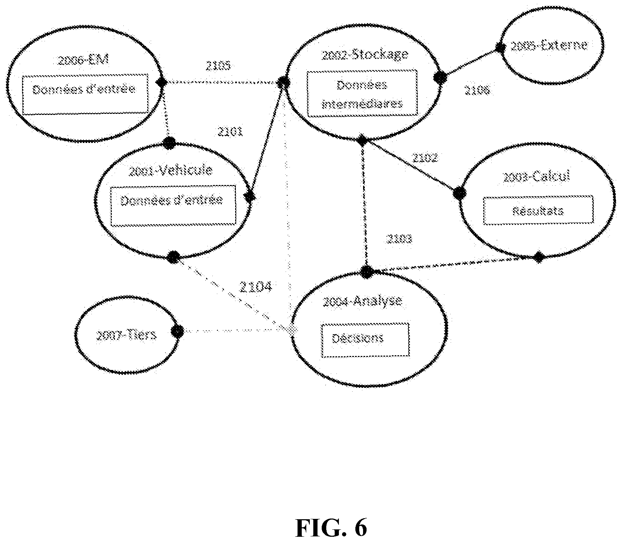

La [Fig.6] est un synoptique du système de mise en oeuvre des procédés d'estimation du niveau d'usure globale et de prédiction fin de vie d'un pneumatique. Le synoptique comprend des éléments structurels représentés par des bulles et des moyens de transmission entre les éléments structurels représentés par un trait entre les éléments structurels. Le trait peut comprendre à son extrémité un cercle plein traduisant un point d'arrivée du moyen de transmission ou un losange plein traduisant un point de départ du moyen de transmission. Pour autant le sens de communication indiqué peut être aussi bilatéral comme par exemple si le processus intègre une phase d'interrogation d'un élément structurel vers un autre élément structurel. Enfin le synoptique comprend aussi les données contenues et échangées entre les divers éléments structurels sous la forme de rectangles.

Les données d'entrée sont présentes au niveau du véhicule 2001. Celles-ci peuvent aussi être présentes au moins partiellement au niveau de l'ensemble monté 2006 comprenant le pneumatique qui est le centre d'intérêt des méthodes, objets de cette invention. Ces données d'entrées transitent vers un moyen de stockage 2002 par le biais de moyens de transmission 2101. Au cas où une partie des données d'entrée sont issues de l'ensemble monté 2006, celles-ci sont directement ou par l'intermédiaire du véhicule 2001 transmises au moyen de stockage 2002. Les moyens de transmission issus de l'ensemble monté, notés 2105 sont représentés par des points noirs.

Les données intermédiaires contenues au niveau du moyen de stockage 2002 sont issues en partie des données d'entrée provenant du véhicule 2001. Cependant, elles peuvent aussi provenir de système extérieur 2005 par l'intermédiaire de moyen de transmission 2106. Ces données intermédiaires provenant de système externe peuvent être par exemple, la fonction de transfert F associée à l'ensemble monté ou la fonction de passage $\beta$ faisant le lien entre la rigidité de la bande de roulement du pneumatique et la nature de la portion de route.

Ensuite, le système comprend un moyen de calcul 2003 permettant d'obtenir les divers résultats par des opérations entre les données intermédiaires. De ce fait, un moyen de transmission 2102 permet la communication des données intermédiaires vers le moyen de calcul 2003 pour générer des résultats.

Ces résultats peuvent alors transiter par le biais de moyens de transmission 2103 en trait pointillé vers le moyen d'analyse 2004 soit directement, soit par l'intermédiaire du moyen de stockage 2002. Le moyen d'analyse 2004 délivre alors une décision qui sera, par l'intermédiaire de moyen de transmission 2107 en trait gris alterné de points et de pointillés, transmise directement au véhicule 2001 ou à un tiers 2007 ou stockée au niveau du moyen de stockage 2002 selon le caractère urgent de la décision.

Cette décision peut être une information sur l'état d'usure E du pneumatique par rapport à l'épaisseur $E^{fin}$ de fin de vie du pneumatique. La décision peut aussi être selon la prédiction fin de vie $U^{fin}$ du pneumatique, des actions de changement du pneumatique à planifier ou à effectuer rapidement. Dans le premier cas, l'information sera transmise à un gestionnaire de flotte pour organiser la planification. Dans le second cas, la décision remonte au véhicule pour que d'une part le conducteur puisse adapter les conditions d'usage du pneumatique à son état d'usure et qu'il anticipe au plus tôt le changement du pneumatique.

**Revendications**

1. Méthode (1000) d'estimation du niveau d'usure globale d'un pneumatique d'un ensemble monté en condition de roulage sur un véhicule, le pneumatique ayant un sommet qui se prolonge par deux flancs se terminant par deux bourrelets, de révolution autour d'un axe naturel de rotation, le sommet comprenant une bande de roulement située radialement extérieurement au pneumatique par rapport à l'axe naturel de rotation, ladite bande de roulement présentant une épaisseur E (1011) moyenne, l'ensemble monté comprenant des composants, dont une roue et le pneumatique, délimitant une cavité interne, comprenant les étapes suivantes :

     - Obtenir une fonction de transfert F (1005) de l'ensemble monté entre une rigidité longitudinale $K_{XX}^{ref}$ sur un sol de référence et des facteurs influents, comme étant le produit d'une première fonction F1 ayant comme facteurs influents au moins la pression de gonflage P, la température T et la charge Z subie, par une seconde fonction F2 bijective ayant au moins comme facteur influent l'épaisseur E de la bande de roulement ;
     - Obtenir une fonction de passage $\beta$ (1003) de

l'ensemble monté , qui dépend des facteurs influents liés à l'usage de l'ensemble monté que sont la pression de gonflage P, la température T et la charge Z subie par l'ensemble monté, définie pour une portion de route comme étant le rapport des rigidités longitudinales Kxx de l'ensemble monté à iso facteurs influents dont celle au numérateur est évaluée sur un sol équivalent à la portion de route et celle au dénominateur est évaluée sur un sol de référence, les dites rigidités longitudinales Kxx étant obtenues par une campagne de caractérisations expérimentales et/ou simulations numériques ;

Sur un cycle de mesures c'est-à-dire à iso condition d'usage pour les facteurs influents tels que la pression P de gonflage, la température T et la charge Z subie :

- Déterminer au moins un effort Fx subi par l'ensemble monté et au moins un taux de glissement g% au centre roue de l'ensemble monté, ou obtenir des paramètres Q1 du véhicule permettant leurs dites déterminations (1007), lors d'un roulage en ligne droite du véhicule comportant des variations d'accélération sur ladite portion de route, celle-ci étant sèche ;
- Déterminer une charge Z1, ou obtenir des paramètres Q2 du véhicule permettant ladite détermination, subie par l'ensemble monté en condition de roulage (1008) ;
- Déterminer une température T1 de l'ensemble monté en condition de roulage (1008)
- Déterminer une pression de gonflage P1 de la cavité interne de l'ensemble monté en condition de roulage (1008), et

**caractérisée en ce qu'**elle comprend l'obtention d'une première rigidité longitudinale $K_{XX}^{reel}$ (1009) de l'ensemble monté sur sol réel à l'aide d'une première relation liant les efforts Fx, les taux de glissement g% ou les paramètres Q1, **en ce qu'**elle comprend l'obtention d'une seconde rigidité longitudinale sur le sol de référence $K_{XX}^{ref}$ (1010) évaluée à l'aide de la fonction de transfert F (1005) alimentée par au moins les facteurs influents T1, P1, Z1 ou les paramètres Q2 (1008) et au moins une épaisseur caractéristique E0 (1002) de la bande de roulement, **en ce qu'**elle comprend l'obtention d'un scalaire $\beta_1$ défini à l'aide de la fonction de passage β alimentée par au moins les facteurs influents T1, P1, Z1 **et en ce que** l'épaisseur E (1011) de la bande de roulement est déterminée par une relation liant le scalaire $\beta_1$, la première rigidité longitudinale $K_{XX}^{reel}$ (1009) et la seconde rigidité longitudinale $K_{XX}^{ref}$ (1010) de la manière suivante :

$$E = F_2^{-1}\left(\frac{F_2(E_0) * K_{xx}^{reel}}{\beta_1 * K_{xx}^{ref}}\right)$$

**2.** Méthode (1000) d'estimation du niveau d'usure globale d'un pneumatique d'un ensemble monté selon la revendication 1 dans laquelle, la fonction de transfert F (1005) de l'ensemble monté dépendant du vieillissement D d'au moins un des composants de l'ensemble monté, la méthode comprend l'obtention du vieillissement D1 (1006) des au moins un composants de l'ensemble monté dans un premier cycle d'état de l'ensemble monté comprenant le cycle de mesure, et l'obtention de la seconde rigidité longitudinale $K_{XX}^{ref}$ (1010) est effectuée en employant le vieillissement D1 (1006) des au moins un composants de l'ensemble monté.

**3.** Méthode (1000) d'estimation du niveau d'usure globale d'un pneumatique d'un ensemble monté selon l'une des revendications précédentes dans laquelle l'obtention de la fonction de transfert F (1005) de l'ensemble monté est effectuée au travers d'une campagne de caractérisation comprise dans le groupe comprenant simulation numérique et mesures expérimentales.

**4.** Méthode (1000) d'estimation du niveau d'usure globale d'une enveloppe pneumatique d'un ensemble monté selon l'une des revendications précédentes dans laquelle l'obtention de la fonction de transfert F (1005) est effectuée sur le sol macrolisse.

**5.** Méthode (1000) d'estimation du niveau d'usure globale d'un pneumatique d'un ensemble monté selon l'une des revendications précédentes dans laquelle l'obtention de la fonction de transfert F (1005) est effectuée en employant un modèle mathématique du type:

$$F = \left(\prod^j \left(\frac{G^j}{G_0^j}\right)^{\alpha_j}\right) * \left(\frac{E}{E_{ref}}\right)^\alpha$$

Où,
$G^j_0$ et $E_{ref}$ sont des constantes :

$\alpha_j$, et α sont des réels ;
$G^j$ sont des facteurs influents ;

**6.** Méthode (1000) d'estimation du niveau d'usure globale d'un pneumatique d'un ensemble monté selon l'une quelconque des revendications 1 à 5 dans laquelle l'obtention de la fonction de passage β (1004) comprend les étapes suivantes :

- Obtenir une épaisseur moyenne E2 de la bande de roulement ;
- Effectuer un cycle de mesures associé à une portion de route, ladite portion de route étant sèche, dans un même cycle d'état de l'ensemble monté ;
- Obtenir la première rigidité longitudinale kxx sur sol réel ;
- Obtenir une troisième rigidité longitudinale $k''_{xx}{}^{ref}$ sur sol de référence évaluée à l'aide de la fonction de transfert F alimentée par des facteurs influents comprenant les facteurs influents obtenus lors du cycle de mesure et au moins l'épaisseur E2 de la bande de roulement ;
- Obtenir un coefficient λ comme le rapport de la première rigidité longitudinale kxx sur sol réel sur la troisième rigidité longitudinale $k''_{xx}{}^{ref}$ sur sol de référence ;
- Déterminer la fonction de passage β associée à la portion de route passant par le point (λ, $P_1$, $Z_1$, $T_1$) associé au cycle de mesures.

7. Méthode d'estimation (1000) du niveau d'usure globale d'un pneumatique d'un ensemble monté selon l'une des revendications 1 à 5 dans laquelle, l'obtention de la fonction de passage β (1004) comprend les étapes suivantes :

- Obtenir une fonction de passage β2 de l'ensemble monté définie pour une seconde portion de route ;
- Obtenir pour le sol de la seconde portion de route un vecteur M2 caractérisant la macrorugosité du sol relativement au sol de référence ;
- Obtenir pour le sol de la portion de route un vecteur M caractérisant la macrorugosité du sol relativement au sol de référence ;
- Déterminer la fonction de passage β de l'ensemble monté définie pour la portion de route e par une relation liant la fonction de passage β2 et la position relative du vecteur M2 par rapport au vecteur M.

8. Méthode (1000) d'estimation du niveau d'usure globale d'un pneumatique d'un ensemble monté selon l'une des revendications 1 à 7 comprenant les étapes complémentaires :

- Déterminer une variation ΔU (1012) entre au moins deux obtentions de l'épaisseur E de la bande de roulement du au moins un paramètre U lié à l'utilisation du pneumatique compris dans le groupe comprenant cycles de rotation effectués, kilomètres parcourus, temps, temps d'utilisation du pneumatique ;
- Déterminer au moins une vitesse V (1013) d'usure globale du pneumatique définie par le rapport entre une variation ΔE de l'épaisseur E entre les au moins deux obtentions de l'épaisseur E (1011) de la bande de roulement et la variation ΔU (1012) du au moins un paramètre U lié à l'utilisation du pneumatique.

9. Méthode (1100) de prédiction de fin de vie d'un pneumatique ayant une bande de roulement située radialement extérieurement par rapport à un axe naturel de rotation du pneumatique, présentant une épaisseur moyenne E, une épaisseur caractéristique E0 (1002) et une épaisseur fin de vie $E^{fin}$ (1005), comprenant les étapes suivantes :

- Déterminer au moins une épaisseur E1(1011) de la bande de roulement d'un pneumatique au cours d'au moins un premier cycle d'état du pneumatique d'un premier ensemble monté comprenant ledit pneumatique en employant la méthode (1000) d'estimation de l'usure globale d'un pneumatique selon l'une des revendications 1 à 7 ;
- Déterminer une vitesse V1 (1013) d'usure du pneumatique associée à la au moins une épaisseur E1 en employant la méthode (1000) d'estimation de l'usure globale d'un pneumatique selon la revendication 9 ;
- Déterminer une valeur U1 (1014) du paramètre U associée à la au moins une épaisseur E1 (1011) ;
- Déterminer la prédiction fin de vie du pneumatique à l'aide d'une valeur $U^{fin}$ (1015) du au moins un paramètre U lié à l'utilisation du pneumatique définie par une seconde fonction liant la vitesse V1 (1013) d'usure, la au moins une épaisseur E1 (1011) associée à une valeur U1 (1014) du paramètre U et l'épaisseur fin de vie $E^{fin}$ (1005).

10. Système (2000) pour la mise en oeuvre de la méthode (1000) d'estimation du niveau d'usure globale d'un pneumatique selon l'une des revendications 1 à 8 et/ou de la méthode (1100) de prédiction de fin de vie d'un pneumatique selon la revendication 9 comprenant :

- un véhicule (2001) équipé d'au moins un ensemble monté (2006) comprenant ledit pneumatique pouvant être mis en condition de roulage ;
- au moins un moyen de stockage (2002),
- au moins un moyen de calcul (2003),
- au moins un moyen d'analyse (2004),
- au moins un premier moyen de transmission (2101) entre le véhicule (2001) et le au moins un moyen de stockage (2002),
- au moins un deuxième moyen de transmission (2102) entre le au moins un moyen de stockage (2002) et le au moins un moyen de calcul (2003),
- au moins un troisième moyen de transmission (2103) entre le au moins un moyen d'analyse (2004) et le au moins un moyen de stockage (2002) ou le au moins un moyen de calcul (2003),

- des données d'entrée issues du véhicule (2001),

- des données intermédiaires stockées dans le au moins un moyen de stockage (2002) pouvant être transmises par au moins un système extérieur (2005),

- au moins un résultat de sortie issu du au moins un moyen de calcul (2003),

- au moins une décision issue du au moins un moyen d'analyse (2004),

**dans lequel** les données d'entrée sont comprises dans le groupe comprenant la charge Z1, la température T1, la pression P1, l'effort FX, le taux de glissement g%, les paramètres Q1 et Q2, les au moins un paramètre U lié à l'utilisation du pneumatique et la variations $\Delta U$ des au moins un paramètres U, **dans lequel** les données intermédiaires sont comprises dans le groupe comprenant l'épaisseur E2, le vieillissement D1 des au moins un composants de l'ensemble monté, l'épaisseur caractéristique E0 et l'épaisseur fin de vie $E^{fin}$ de la bande de roulement dudit pneumatique, la fonction de transfert F de l'ensemble monté, la fonction de passage $\beta$ de l'ensemble monté associé à la portion de route, le vecteur M caractérisant la macrorugosité du sol de la portion de route par rapport à un sol de référence, **dans lequel** le au moins un résultat de sortie est compris dans le groupe comprenant l'épaisseur E de la bande de roulement dudit pneumatique, la vitesse V d'usure globale dudit pneumatique, la prédiction de fin de vie $U^{fin}$ du pneumatique associée au paramètre U, la première rigidité longitudinale $k_{XX}^{réel}$, la seconde rigidité longitudinale $k'_{XX}^{ref}$, la troisième rigidité longitudinale $k''_{XX}^{ref}$ **et dans lequel,** la au moins une décision exprimant l'état d'usure du pneumatique est transmise et/ou stockée dans le au moins un moyen de stockage (2002), à l'aide de au moins un quatrième moyen de transmission (2104).

11. Système (2000) pour la mise en oeuvre de la méthode (1000) d'estimation de l'usure globale du pneumatique et/ou de la méthode (1100) de prédiction de fin de vie d'un pneumatique selon la revendication 10 dans lequel, l'ensemble monté (2006) étant équipé d'un dispositif de mesure comprenant un moyen de stockage et d'un moyen de transmission (2105) vers le véhicule (2001) ou le au moins un moyen de stockage (2002), une partie des données d'entrée sont issues de l'ensemble monté (2006).

12. Système (2000) pour la mise en oeuvre de la méthode (1000) d'estimation de l'usure globale du pneumatique et/ou de la méthode (1100) de prédiction de fin de vie d'un pneumatique selon l'une des revendications 10 à 11 dans lequel, le au moins un quatrième moyen de transmission (2104) comprend un moyen de transmission vers le véhicule (2001) assurant la communication de la au moins une décision.

13. Système (2000) pour la mise en oeuvre de la méthode (1000) d'estimation de l'usure globale du pneumatique et/ou de la méthode (1100) de prédiction de fin de vie d'un pneumatique selon l'une des revendications 10 à 11 dans lequel, le au moins un quatrième moyen de transmission (2104) comprend un moyen de transmission vers un tiers (2007) tel que le gestionnaire de flotte de véhicule assurant la communication de la au moins une décision.

14. Système (2000) pour la mise en oeuvre de la méthode (1000) d'estimation de l'usure globale du pneumatique et/ou de la méthode (1100) de prédiction de fin de vie d'un pneumatique selon l'une des revendications 10 à 13 dans lequel une partie du au moins un moyen de stockage (2002) et/ou une partie du au moins un moyen de calcul (2003) et/ou une partie du au moins un moyen d'analyse (2004) sont localisées sur le véhicule (2001) ou sur l'ensemble monté (2006).

## Patentansprüche

1. Methode (1000) zur Schätzung des Gesamtverschleißgrades eines Reifens einer unter Fahrbedingungen an einem Fahrzeug montierten Einheit, wobei der Reifen einen Scheitel hat, der in zwei Flanken übergeht, die mit zwei Wülsten enden, um eine natürliche Rotationsachse drehend, wobei der Scheitel einen Laufstreifen umfasst, der in Bezug auf die natürliche Rotationsachse radial außen am Reifen gelegen ist, wobei der Laufstreifen eine mittlere Dicke E (1011) aufweist, wobei die montierte Einheit Komponenten umfasst, darunter ein Rad und den Reifen, die einen inneren Hohlraum begrenzen, umfassend die folgenden Schritte:

- Erhalten einer Übertragungsfunktion F (1005) der montierten Einheit zwischen einer Längssteifigkeit $K_{XX}^{ref}$ auf einem Referenzboden und Einflussfaktoren als das Produkt aus einer ersten Funktion F1, die als Einflussfaktoren mindestens den Luftdruck P, die Temperatur T und die erfahrene Last Z hat, und aus einer zweiten bijektiven Funktion F2, die mindestens als Einflussfaktor die Dicke E des Laufstreifens hat;
- Erhalten einer Übergangsfunktion $\beta$ (1003) der montierten Einheit, die von den mit der Benutzung der montierten Einheit zusammenhängenden Einflussfaktoren abhängt, die der Luftdruck P, die Temperatur T und die von der montierten Einheit erfahrene Last Z sind, die für einen Straßenabschnitt definiert ist als das Verhältnis der Längssteifigkeiten $K_{XX}$ der montierten Einheiten bei gleichen Einflussfaktoren, wobei die des Zählers auf einem zu dem Straßenabschnitt gleichwertigen Boden bewertet wird und die des Nenners auf einem Referenzboden bewertet wird, wobei die Längssteifigkeiten $K_{XX}$ durch eine Kampagne experimenteller Charakterisierungen und/oder numerischer Simulationen erhalten werden;

Über einen Messzyklus, d. h. bei gleichen Benutzungsbedingungen für die Einflussfaktoren wie den Luftdruck P, die Temperatur T und die erfahrene Last Z:

- Bestimmen mindestens einer von der montierten Einheit erfahrenen Kraft $F_X$ und mindestens einer Schlupfrate g% im Radmittelpunkt der montierten Einheit oder Erhalten der Parameter Q1 des Fahrzeugs, die diese Bestimmungen (1007) ermöglichen, bei einer Geradeausfahrt des Fahrzeugs, die Beschleunigungsänderungen auf dem Straßenabschnitt umfasst, wobei dieser trocken ist;
- Bestimmen einer Last Z1, oder Erhalten der Parameter Q2 des Fahrzeugs, die diese Bestimmung ermöglichen, die von der montierten Einheit unter Fahrbedingungen erfahren wird (1008);
- Bestimmen einer Temperatur T1 der montierten Einheit unter Fahrbedingungen (1008);
- Bestimmen eines Luftdrucks P1 des inneren Hohlraums der montierten Einheit unter Fahrbedingungen (1008), und

**dadurch gekennzeichnet, dass** sie das Erhalten einer ersten Längssteifigkeit $K_{XX}^{reel}$ (1009) der montierten Einheit auf realem Boden mithilfe einer ersten Gleichung umfasst, die die Kräfte $F_X$, die Schlupfraten g% oder die Parameter QI verknüpft, dass sie das Erhalten einer zweiten Längssteifigkeit auf dem Referenzboden $K_{XX}^{ref}$ (1010) umfasst, die mithilfe der Übertragungsfunktion F bewertet wird (1005), in die mindestens die Einflussfaktoren T1, P1, Z1 oder die Parameter Q2 (1008) und mindestens eine charakteristische Dicke E0 (1002) des Laufstreifens eingehen, dass sie das Erhalten eines Skalars $\beta_1$ umfasst, der mithilfe der Übergangsfunktion $\beta$ definiert wird, in die mindestens die Einflussfaktoren T1, P1, Z1 eingehen, und dass die Dicke E (1011) des Laufstreifens durch eine Gleichung bestimmt wird, die den Skalar $\beta_1$, die erste Längssteifigkeit $K_{XX}^{reel}$ (1009) und die zweite Längssteifigkeit $K_{XX}^{ref}$ (1010) auf die folgende Weise verknüpft:

$$E = F_2^{-1}\left(\frac{F_2(E_0) * K_{xx}^{reel}}{\beta_1 * K_{xx}^{ref}}\right)$$

2. Methode (1000) zur Schätzung des Gesamtverschleißgrades eines Reifens einer montierten Einheit nach Anspruch 1, bei der die Übertragungsfunktion F (1005) der montierten Einheit von der Alterung D mindestens einer der Komponenten der montierten Einheit abhängt, die Methode das Erhalten der Alterung D1 (1006) der mindestens einen Komponente der montierten Einheit in einem ersten Zustandszyklus der montierten Einheit umfasst, der den Messzyklus umfasst, und das Erhalten der zweiten Längssteifigkeit $K_{XX}^{ref}$ (1010) erfolgt, indem die Alterung D1 (1006) der mindestens einen Komponente der montierten Einheit verwendet wird.

3. Methode (1000) zur Schätzung des Gesamtverschleißgrades eines Reifens einer montierten Einheit nach einem der vorhergehenden Ansprüche, bei der das Erhalten der Übertragungsfunktion F (1005) der montierten Einheit im Wege einer Charakterisierungskampagne erfolgt, die in der Gruppe enthalten ist, die numerische Simulation und experimentelle Messungen umfasst.

4. Methode (1000) zur Schätzung des Gesamtverschleißgrades einer Reifenhülle einer montierten Einheit nach einem der vorhergehenden Ansprüche, bei der das Erhalten der Übertragungsfunktion F (1005) auf dem makroglatten Boden erfolgt.

5. Methode (1000) zur Schätzung des Gesamtverschleißgrades eines Reifens einer montierten Einheit nach einem der vorhergehenden Ansprüche, bei der das Erhalten der Übertragungsfunktion F (1005) erfolgt, in dem ein mathematisches Modell des folgenden Typs verwendet wird:

$$F = \left(\prod^j \left(\frac{G^j}{G_0^j}\right)^{\alpha_j}\right) * \left(\frac{E}{E_{ref}}\right)^\alpha$$

Worin,
$G_0^j$ und $E_{ref}$ Konstanten sind:

$\alpha_j$ und $\alpha$ reelle Zahlen sind;
$G^i$ Einflussfaktoren sind;

6. Methode (1000) zur Schätzung des Gesamtverschleißgrades eines Reifens einer montierten Einheit nach einem der Ansprüche 1 bis 5, bei der das Erhalten der Übergangsfunktion $\beta$ (1004) die folgenden Schritte umfasst:

- Erhalten einer mittleren Dicke E2 des Laufstreifens;
- Durchführen eines Messzyklus, der einem Straßenabschnitt zugeordnet ist, wobei der Straßenabschnitt trocken ist, in einem selben Zustandszyklus der montierte Einheit;
- Erhalten der ersten Längssteifigkeit $k_{XX}$ auf realem Boden;
- Erhalten einer dritten Längssteifigkeit $k''_{XX}{}^{ref}$ auf Referenzboden, die mithilfe der Übertragungsfunktion F bewertet wird, in die Einflussfaktoren, die die beim Messzyklus erhaltenen Einflussfaktoren umfassen, und mindestens die Dicke E2 des Laufstreifens eingehen;
- Erhalten eines Koeffizienten λ als das Verhältnis der ersten Längssteifigkeit $k_{XX}$ auf realem Boden zur dritten Längssteifigkeit $k''_{XX}{}^{ref}$ auf Referenzboden;
- Bestimmen der dem Straßenabschnitt zugeordneten Übergangsfunktion β, die durch den dem Messzyklus zugeordneten Punkt $(\lambda, P_1, Z_1, T_1)$ verläuft.

7. Methode zur Schätzung (1000) des Gesamtverschleißgrades eines Reifens einer montierten Einheit nach einem der Ansprüche 1 bis 5, bei der das Erhalten der Übergangsfunktion β (1004) die folgenden Schritte umfasst:

- Erhalten einer Übergangsfunktion β2 der montierten Einheit, die für einen zweiten Straßenabschnitt definiert ist;
- Erhalten für den Boden des zweiten Straßenabschnitts eines Vektors M2, der die Makrorauheit des Bodens relativ zum Referenzboden charakterisiert;
- Erhalten für den Boden des Straßenabschnitts eines Vektors M, der die Makrorauheit des Bodens relativ zum Referenzboden charakterisiert;
- Bestimmen der Übergangsfunktion β der montierten Einheit, die für den Straßenabschnitt e definiert ist, durch eine Gleichung, die die Übergangsfunktion β2 und die relative Position des Vektors M2 in Bezug auf den Vektor M verknüpft.

8. Methode (1000) zur Schätzung des Gesamtverschleißgrades eines Reifens einer montierten Einheit nach einem der Ansprüche 1 bis 7, umfassend die ergänzenden Schritte:

- Bestimmen einer Änderung ΔU (1012) zwischen dem mindestens zweimaligen Erhalten der Dicke E des Laufstreifens des mindestens einen Parameters U, der mit der Verwendung des Reifens zusammenhängt, enthalten in der Gruppe, die durchgeführte Rotationszyklen, zurückgelegte Kilometer, Zeit, Verwendungszeit des Reifens umfasst;
- Bestimmen mindestens einer Gesamtverschleißgeschwindigkeit V (1013) des Reifens, die durch das Verhältnis zwischen einer Änderung ΔE der Dicke E zwischen dem mindestens zweimaligen Erhalten der Dicke E (1011) des Laufstreifens und der Änderung ΔU (1012) des mindestens einen Parameters U, der mit der Verwendung des Reifens zusammenhängt, definiert wird.

9. Methode (1100) zur Vorhersage des Lebensdauerendes eines Reifens, der einen Laufstreifen hat, der in Bezug auf eine natürliche Rotationsachse des Reifens radial außen gelegen ist und eine mittlere Dicke E, eine charakteristische Dicke E0 (1002) und eine Lebensdauerende-Dicke $E^{fin}$ (1005) aufweist, umfassend die folgenden Schritte:

- Bestimmen mindestens einer Dicke E1 (1011) des Laufstreifens eines Reifens während mindestens eines ersten Zustandszyklus des Reifens einer ersten montierten Einheit, die den Reifen umfasst, unter Verwendung der Methode (1000) zur Schätzung des Gesamtverschleißes eines Reifens nach einem der Ansprüche 1 bis 7;
- Bestimmen einer Verschleißgeschwindigkeit V1 (1013) des Reifens, die der mindestens einen Dicke E1 zugeordnet ist, unter Verwendung der Methode (1000) zur Schätzung des Gesamtverschleißes eines Reifens nach Anspruch 9;
- Bestimmen eines Werts U1 (1014) des Parameters U, der der mindestens einen Dicke E1 (1011) zugeordnet ist;
- Bestimmen der Vorhersage des Lebensdauerendes des Reifens mithilfe eines Werts $U^{fin}$ (1015) des mindestens einen Parameters U, der mit der Verwendung des Reifens zusammenhängt, definiert durch eine zweite Funktion, die die Verschleißgeschwindigkeit V1 (1013), die mindestens eine Dicke E1 (1011), die einem Wert U1 (1014) des Parameters U zugeordnet ist, und die Lebensdauerende-Dicke $E^{fin}$ (1005) verknüpft.

10. System (2000) zur Umsetzung der Methode (1000) zur Schätzung des Gesamtverschleißgrades eines Reifens nach einem der Ansprüche 1 bis 8 und/oder der Methode (1100) zur Vorhersage des Lebensdauerendes eines Reifens nach Anspruch 9, umfassend:

- ein Fahrzeug (2001), das mit mindestens einer montierten Einheit (2006) ausgerüstet ist, die den Reifen umfasst, der in Fahrbedingung versetzt werden kann;

- mindestens ein Speichermittel (2002),
- Mindestens ein Rechenmittel (2003),
- mindestens ein Analysemittel (2004),
- mindestens ein erstes Übertragungsmittel (2101) zur Übertragung zwischen dem Fahrzeug (2001) und dem mindestens einen Speichermittel (2002),
- mindestens ein zweites Übertragungsmittel (2102) zur Übertragung zwischen dem mindestens einen Speichermittel (2002) und dem mindestens einen Rechenmittel (2003),
- mindestens ein drittes Übertragungsmittel (2103) zur Übertragung zwischen dem mindestens einen Analysemittel (2004) und dem mindestens einen Speichermittel (2002) oder dem mindestens einen Rechenmittel (2003),
- Eingangsdaten, die aus dem Fahrzeug (2001) stammen,
- Zwischendaten, die in dem mindestens einen Speichermittel (2002) gespeichert sind und von mindestens einem externen System (2005) übertragen werden können,
- mindestens ein Ausgangsergebnis, das aus dem mindestens einen Rechenmittel (2003) stammt,
- mindestens eine Entscheidung, die aus dem mindestens einen Analysemittel (2004) stammt,

bei dem die Eingangsdaten in der Gruppe enthalten sind, die die Last Z1, die Temperatur T1, den Druck P1, die Kraft FX, die Schlupfrate g%, die Parameter Q1 und Q2, den mindestens einen Parameter U, der mit der Verwendung des Reifens zusammenhängt, und die Änderungen $\Delta U$ des mindestens einen Parameters U umfasst, bei dem die Zwischendaten in der Gruppe enthalten sind, die die Dicke E2, die Alterung D1 der mindestens einen Komponente der montierten Einheit, die charakteristische Dicke E0 und die Lebensdauerende-Dicke $E^{fin}$ des Laufstreifens des Reifens, die Übertragungsfunktion F der montierten Einheit, die Übergangsfunktion $\beta$ der montierten Einheit, die dem Straßenabschnitt zugeordnet ist, den Vektor M, der die Makrorauheit des Bodens des Straßenabschnitts in Bezug auf einen Referenzboden charakterisiert, umfasst, bei dem das mindestens eine Ausgangsergebnis in der Gruppe enthalten ist, die die Dicke E des Laufstreifens des Reifens, die Gesamtverschleißgeschwindigkeit V des Reifens, die Vorhersage des Lebensdauerendes $U^{fin}$ des Reifens, die dem Parameter U zugeordnet ist, die erste Längssteifigkeit $k_{XX}^{réel}$, die zweite Längssteifigkeit $k'_{XX}^{ref}$, die dritte Längssteifigkeit $k''_{XX}^{ref}$ umfasst, und bei dem die mindestens eine Entscheidung, die den Verschleißzustand des Reifens ausdrückt, mithilfe mindestens eines vierten Übertragungsmittels (2104) übertragen wird und/oder in dem mindestens einen Speichermittel (2002) gespeichert wird.

**11.** System (2000) zur Umsetzung der Methode (1000) zur Schätzung des Gesamtverschleißes des Reifens und/oder der Methode (1100) zur Vorhersage des Lebensdauerendes eines Reifens nach Anspruch 10, bei dem, wenn die montierte Einheit (2006) mit einer Messvorrichtung ausgestattet ist, die ein Speichermittel und ein Übertragungsmittel (2105) zur Übertragung zu dem Fahrzeug (2001) oder dem mindestens einen Speichermittel (2002) umfasst, ein Teil der Eingangsdaten aus der montierten Einheit (2006) stammt.

**12.** System (2000) zur Umsetzung der Methode (1000) zur Schätzung des Gesamtverschleißes des Reifens und/oder der Methode (1100) zur Vorhersage des Lebensdauerendes eines Reifens nach einem der Ansprüche 10 bis 11, bei dem das mindestens eine vierte Übertragungsmittel (2104) ein Übertragungsmittel zur Übertragung zum Fahrzeug (2001) umfasst, das die Kommunikation der mindestens einen Entscheidung gewährleistet.

**13.** System (2000) zur Umsetzung der Methode (1000) zur Schätzung des Gesamtverschleißes des Reifens und/oder der Methode (1100) zur Vorhersage des Lebensdauerendes eines Reifens nach einem der Ansprüche 10 bis 11, bei dem das mindestens eine vierte Übertragungsmittel (2104) ein Übertragungsmittel zur Übertragung zu einem Dritten (2007) wie dem Fahrzeugflottenmanager umfasst, der die Kommunikation der mindestens einen Entscheidung gewährleistet.

**14.** System (2000) zur Umsetzung der Methode (1000) zur Schätzung des Gesamtverschleißes des Reifens und/oder der Methode (1100) zur Vorhersage des Lebensdauerendes eines Reifens nach einem der Ansprüche 10 bis 13, bei dem ein Teil des mindestens einen Speichermittels (2002) und/oder ein Teil des mindestens einen Rechenmittels (2003) und/oder ein Teil des mindestens einen Analysemittels (2004) am Fahrzeug (2001) oder an der montierten Einheit (2006) angeordnet ist.

**Claims**

**1.** Method (1000) for estimating the level of overall wear of a tyre of an assembly mounted under running conditions on a vehicle, the tyre having a crown which is extended by two sidewalls that end in two beads, exhibiting revolution about a natural axis of rotation, the crown comprising a tread situated radially on the outside of the tyre with respect to the natural axis of rotation, said tread having a mean thickness E (1011), the mounted assembly comprising components, namely a wheel and the tyre, delimiting an internal cavity, comprising the following steps:

- acquiring a transfer function F (1005) of the mounted assembly between a longitudinal stiffness $K_{XX}^{ref}$ on a reference ground and influencing factors, as the product of a first function F1 having as influencing factors at least the inflation pressure P, the temperature T and the load Z experienced, and a second, bijective function F2 having at least as influencing factor the thickness E of the tread;

- acquiring a passage function β (1003) of the mounted assembly, which depends from influencing parameters associated with use of mounted assembly such as the inflation pressure P, the temperature T and the load Z experienced, said passage function being defined for a section of road as the ratio of the longitudinal stiffnesses Kxx of the mounted assembly for the same influencing factors, the numerator stiffness being evaluated on ground equivalent to the section of road and the denominator stiffness being evaluated on a reference ground, the said longitudinal stiffnesses Kxx are determined by way of a characterization campaign comprising numerical simulations and/or experimental measurements;

in one measurement cycle, that is to say the mounted assembly is under the same conditions of use for the parameters such as the inflation pressure P, the temperature T and the load Z experienced :

- determining at least one force Fx experienced by the mounted assembly and at least one rate of slip g% at the wheel centre of the mounted assembly, or acquiring parameters Q1 of the vehicle allowing said determinations (1007) thereof, when the vehicle is running in a straight line involving variations in acceleration on said section of road, the latter being dry;
- determining a load Z1, or acquiring parameters Q2 of the vehicle allowing said determination, experienced by the assembly mounted under running conditions (1008);
- determining a temperature T1 of the assembly mounted under running conditions (1008);
- determining an inflation pressure P1 of the internal cavity of the assembly mounted under running conditions (1008), and

**characterized in that** it comprises the acquisition of a first longitudinal stiffness $K_{XX}^{act}$ (1009) of the mounted assembly on actual ground with the aid of a first relationship between the forces Fx, the rates of slip g% or the parameters Q1, **in that** it comprises the acquisition of a second longitudinal stiffness on the reference ground $K_{XX}^{ref}$ (1010), said second longitudinal stiffness being evaluated with the aid of the transfer function F (1005) supplied with at least the influencing factors T1, P1, Z1 or the parameters Q2 (1008) and at least one characteristic thickness E0 (1002) of the tread, **in that** it comprises the acquisition of a scalar β1 defined with the aid of the passage function β supplied with at least the influencing factors T1, P1, Z1, **and in that** the thickness E (1011) of the tread is determined by a relationship between the scalar β1, the first longitudinal stiffness $K_{XX}^{act}$ (1009) and the second longitudinal stiffness $K_{XX}^{ref}$ (1010) as follows:

$$E = F_2^{-1}\left(\frac{F_2(E_0) * K_{xx}^{act}}{\beta_1 * K_{xx}^{ref}}\right)$$

2. Method (1000) for estimating the level of overall wear of a tyre of a mounted assembly according to Claim 1, wherein, with the transfer function F (1005) of the mounted assembly depending on the ageing D of at least one of the components of the mounted assembly, the method comprises the acquisition of the ageing D1 (1006) of the at least one component of the mounted assembly in a first state cycle of the mounted assembly comprising the measurement cycle, and the acquisition of the second longitudinal stiffness $K_{XX}^{ref}$ (1010) is effected using the ageing D1 (1006) of the at least one component of the mounted assembly.

3. Method (1000) for estimating the level of overall wear of a tyre of a mounted assembly according to either of the preceding claims, wherein the acquisition of the transfer function F (1005) of the mounted assembly is effected by way of a characterization campaign included in the group comprising numerical simulation and experimental measurements.

4. Method (1000) for estimating the level of overall wear of a tyre of a mounted assembly according to one of the preceding claims, wherein the acquisition of the transfer function F (1005) is effected on macro-smooth ground.

5. Method (1000) for estimating the level of overall wear of a tyre of a mounted assembly according to one of the preceding claims, wherein the acquisition of the transfer function F (1005) is effected using a mathematical model of the type:

$$F = \left(\prod^j \left(\frac{G^j}{G_0^j}\right)^{\alpha_j}\right) * \left(\frac{E}{E_{ref}}\right)^{\alpha}$$

where:
$G^j_0$ and $E_{ref}$ are constants:

$\alpha_j$, and $\alpha$ are real numbers;
$G^j$ are influencing factors.

6. Method (1000) for estimating the level of overall wear of a tyre of a mounted assembly according to any one of Claims 1 to 5, wherein the acquisition of the passage function $\beta$ (1004) comprises the following steps:

- acquiring a mean thickness E2 of the tread;
- carrying out a measurement cycle associated with a section of road, said section of road being dry, in one and the same state cycle of the mounted assembly;
- acquiring the first longitudinal stiffness kxx on actual ground;
- acquiring a third longitudinal stiffness $k''_{xx}{}^{ref}$ on reference ground, said third longitudinal stiffness being evaluated with the aid of the transfer function F supplied with the influencing factors comprising the influencing factors acquired during the measurement cycle and at least the thickness E2 of the tread;
- acquiring a coefficient $\lambda$ as the ratio of the first longitudinal stiffness kxx on actual ground to the third longitudinal stiffness $k''_{xx}{}^{ref}$ on reference ground;
- determining the passage function $\beta$ associated with the section of road passing through the point ($\lambda$, $P_1$, $Z_1$, $T_1$) associated with the measurement cycle.

7. Method (1000) for estimating the level of overall wear of a tyre of a mounted assembly according to one of Claims 1 to 5, wherein the acquisition of the passage function $\beta$ (1004) comprises the following steps:

- acquiring a second passage function $\beta2$ of the mounted assembly, said second passage function being defined for a second section of road;
- acquiring, for the ground of the second section of road, a vector M2 characterizing the macro-roughness of the ground relative to the reference ground;
- acquiring, for the ground of the section of road, a vector M characterizing the macro-roughness of the ground relative to the reference ground;
- determining the passage function $\beta$ of the mounted assembly, said passage function being defined for the section of road e by a relationship between the passage function $\beta2$ and the relative position of the vector M2 with respect to the vector M.

8. Method (1000) for estimating the level of overall wear of a tyre of a mounted assembly according to one of Claims 1 to 7, comprising the following additional steps:

- determining a variation $\Delta U$ (1012), between at least two acquisitions of the thickness E of the tread, of the at least one parameter U associated with the use of the tyre included in the group comprising rotation cycles effected, kilometres travelled, time, use time of the tyre;
- determining at least one rate V (1013) of overall wear of the tyre, said rate being defined by the ratio between a variation $\Delta E$ in the thickness E between the at least two acquisitions of the thickness E (1011) of the tread and the variation $\Delta U$ (1012) of the at least one parameter U associated with the use of the tyre.

9. Method (1100) for predicting the end of life of a tyre having a tread situated radially on the outside with respect to a natural axis of rotation of the tyre, having a mean thickness E, a characteristic thickness E0 (1002) and an end-of-life thickness $E^{end}$ (1005), comprising the following steps:

- determining at least one thickness E1 (1011) of the tread of a tyre during at least one first state cycle of the tyre of a first mounted assembly comprising said tyre using the method (1000) for estimating the overall wear of a tyre according to one of Claims 1 to 7;
- determining a rate V1 (1013) of wear of the tyre, said rate being associated with the at least one thickness E1, using the method (1000) for estimating the overall wear of a tyre according to Claim 8;
- determining a value U1 (1014) of the parameter U, said value being associated with the at least one thickness E1 (1011);
- determining the end-of-life prediction of the tyre with the aid of a value $U^{end}$ (1015) of the at least one parameter U associated with the use of the tyre, said value being defined by a second function linking the rate V1 (1013) of wear, the at least one thickness E1 (1011) associated with a value U1 (1014) of the parameter U and the end-of-life thickness $E^{end}$ (1005).

10. System (2000) for implementing the method (1000) for estimating the level of overall wear of a tyre according to one of Claims 1 to 8 and/or the method (1100) for predicting the end of life of a tyre according to Claim 9, comprising:

- a vehicle (2001) equipped with at least one mounted assembly (2006) comprising said tyre that can be put under running conditions;
- at least one storage means (2002);
- at least one calculation means (2003);
- at least one analysis means (2004);
- at least one first transmission means (2101) between the vehicle (2001) and the at least one storage means (2002);

- at least one second transmission means (2102) between the at least one storage means (2002) and the at least one calculation means (2003);

- at least one third transmission means (2103) between the at least one analysis means (2004) and the at least one storage means (2002) or the at least one calculation means (2003);

- input data from the vehicle (2001);

- intermediate data stored in the at least one storage means (2002) that can be transmitted by at least one external system (2005);

- at least one output result from the at least one calculation means (2003);

- at least one decision from the at least one analysis means (2004);

**wherein** the input data are included in the group comprising the load Z1, the temperature T1, the pressure P1, the force FX, the rate of slip g%, the parameters Q1 and Q2, the at least one parameter U associated with the use of the tyre and the variations $\Delta U$ of the at least one parameter U, **wherein** the intermediate data are included in the group comprising the thickness E2, the ageing D1 of the at least one component of the mounted assembly, the characteristic thickness E0 and the end-of-life thickness $E^{end}$ of the tread of said tyre, the transfer function F of the mounted assembly, the passage function $\beta$ of the mounted assembly associated with the section of road, the vector M characterizing the macroroughness of the ground of the section of road with respect to a reference ground, **wherein** the at least one output result is included in the group comprising the thickness E of the tread of said tyre, the rate V of overall wear of said tyre, the end-of-life prediction $U^{end}$ of the tyre associated with the parameter U, the first longitudinal stiffness $k_{XX}^{act}$, the second longitudinal stiffness $k'_{XX}^{ref}$, the third longitudinal stiffness $k''_{XX}^{ref}$, **and wherein** the at least one decision expressing the state of wear of the tyre is transmitted to and/or stored in the at least one storage means (2002) with the aid of at least one fourth transmission means (2104).

11. System (2000) for implementing the method (1000) for estimating the overall wear of the tyre and/or the method (1100) for predicting the end of life of a tyre according to Claim 10, wherein, with the mounted assembly (2006) being equipped with a measurement device comprising a storage means and a means (2105) for transmitting to the vehicle (2001) or the at least one storage means (2002), at least some of the input data come from the mounted assembly (2006).

12. System (2000) for implementing the method (1000) for estimating the overall wear of the tyre and/or the method (1100) for predicting the end of life of a tyre according to either of Claims 10 and 11, wherein the at least one fourth transmission means (2104) comprises a means for transmitting to the vehicle (2001) that effects the communication of the at least one decision.

13. System (2000) for implementing the method (1000) for estimating the overall wear of the tyre and/or the method (1100) for predicting the end of life of a tyre according to either of Claims 10 and 11, wherein the at least one fourth transmission means (2104) comprises a means for transmitting to a third party (2007), such as the manager of the vehicle fleet, that effects the communication of the at least one decision.

14. System (2000) for implementing the method (1000) for estimating the overall wear of the tyre and/or the method (1100) for predicting the end of life of a tyre according to either of Claims 10 and 13, wherein a part of the at least one storage means (2002) and/or a part of the at least one calculation means (2003) and/or a part of the at least one analysis means (2004) is/are located on the vehicle (2001) or on the mounted assembly (2006).

**FIG. 1a**

**FIG. 1b**

**FIG. 1c**

**FIG. 2**

**FIG. 3**

**FIG. 4**

FIG. 5

**FIG. 6**

**EP 3 894 825 B1**

## RÉFÉRENCES CITÉES DANS LA DESCRIPTION

**Documents brevets cités dans la description**

- US 6076035 A
- WO U22004225423 A1
- WO 03014693 A
- FR 2948764 A1